Europäisches Patentamt

European Patent Office

Office européen des brevets

(19)

(11) EP 0 891 610 B1

(12) FASCICULE DE BREVET EUROPEEN

(45) Date de publication et mention
de la délivrance du brevet:
**29.05.2002 Bulletin 2002/22**

(51) Int Cl.⁷: **G07F 7/10**, E05B 49/00

(21) Numéro de dépôt: **97915536.3**

(22) Date de dépôt: **21.03.1997**

(86) Numéro de dépôt international:
**PCT/FR97/00504**

(87) Numéro de publication internationale:
**WO 97/36263 (02.10.1997 Gazette 1997/42)**

(54) **SYSTEME DE CONTROLE D'ACCES A UNE FONCTION COMPORTANT UN DISPOSITIF DE SYNCHRONISATION D'HORLOGES**

EINE UHRSYNCHRONISIERUNGSVORRICHTUNG ENTHALTENDES ZUGANGSKONTROLLSYSTEM ZU EINER FUNKTION

FUNCTION ACCESS CONTROL SYSTEM COMPRISING A CLOCK SYNCHRONISATION DEVICE

(84) Etats contractants désignés:
**AT BE CH DE DK ES FI FR GB GR IE IT LI NL PT SE**

(30) Priorité: **22.03.1996 US 620162**
**17.04.1996 FR 9604797**

(43) Date de publication de la demande:
**20.01.1999 Bulletin 1999/03**

(73) Titulaire: **ACTIVCARD**
**92156 Suresnes Cédex (FR)**

(72) Inventeur: **AUDEBERT, Yves**
**LOS GATOS, CA 95032 (US)**

(74) Mandataire: **Colas, Jean-Pierre**
**Cabinet JP Colas**
**37, avenue Franklin D. Roosevelt**
**75008 Paris (FR)**

(56) Documents cités:
**EP-A- 0 215 291      EP-A- 0 419 306**
**EP-A- 0 698 706      DE-A- 4 223 258**

# EP 0 891 610 B1

**Description**

La présente invention est relative à un système électronique d'authentification de personnes et/ou de messages, en particulier pour contrôler l'accès à une fonction, permettant à un utilisateur d'obtenir conditionnellement un service ou une autre prestation devant être fourni par une unité de service spécialisée associée au système en question.

Plus particulièrement, l'invention concerne un système de contrôle d'accès à un ordinateur ou, plus généralement à un réseau informatique, ou d'authentification de messages traités dans un tel ordinateur ou réseau informatique, l'utilisation de ceux-ci étant réservée à des personnes s'étant dûment légitimées. De tels réseaux peuvent servir par exemple pour assurer toutes sortes de services impliquant une transaction, le plus souvent à contrepartie économique, telle que le télé-achat, la télévision à péage, la banque à domicile, les jeux télévisés interactifs, ou également le fac-similé confidentiel etc.

Les systèmes connus de ce genre comportent en général au moins un dispositif portable électronique (appelé par commodité "carte" dans la suite de la description) et au moins un dispositif électronique de vérification central (appelé "serveur" dans la suite de la description) destiné à délivrer conditionnellement des autorisations d'accès à ladite fonction.

Une telle autorisation n'est délivrée qu'en cas de concordance d'un mot de passe engendré dans la carte avec un mot de passe engendré dans le serveur. Ces mots de passe sont obtenus en chiffrant une variable à l'aide d'un algorithme de chiffrement utilisant une clé de chiffrement, opérations qui se font simultanément dans la carte et dans le serveur.

Le plus souvent, le processus de chiffrement fait intervenir le paramètre temps ce qui nécessite l'emploi d'horloges à la fois dans les cartes et dans les serveurs. Dans le cas idéal, ces horloges devraient être synchronisées les unes sur les autres ce qui en pratique est difficile à obtenir, surtout si on cherche à implanter dans les cartes, pour des raisons évidentes, des horloges n'ayant pas une précision trop élevée.

Un système présentant les caractéristiques générales ci-dessus est décrit dans le brevet US 4 800 590. Dans ce système, chaque carte comprend un processeur destiné à calculer itérativement un mot de passe à l'aide d'un algorithme de chiffrement. Ce dernier chiffre périodiquement un paramètre (appelé "germe") qui est à son tour fonction du paramètre utilisé au cours du calcul précédent.

Dans un tel système, les horloges de la carte et du serveur doivent en principe être synchrones afin d'éviter des refus d'accès injustifiés (qui ne résultent pas de demandes frauduleuses ou erronées présentées par l'utilisateur de la carte).

Cependant, si l'horloge du serveur peut être très précise, il n'en va pas de même pour celles des cartes. En effet, comme un coût faible des cartes est une contrainte de conception particulièrement importante, il n'est pas possible d'y incorporer des horloges précises coûteuses dépourvues de dérive. En pratique, une synchronisation précise des horloges des cartes et du serveur n'est donc guère envisageable.

Dans le brevet US 4 885 778, on calcule également périodiquement des mots de passe au cours d'intervalles successifs donnés. Une plage de validité fonction du temps est fixée dans le serveur, cette plage ayant une longueur nettement plus grande que l'intervalle de temps. Lorsqu'une demande d'accès est formulée, le serveur calcule autant de mots de passe qu'il y a d'intervalles de temps dans la plage de validité fonction du temps. Si le mot de passe de la carte concorde avec l'un des mots de passe ainsi calculés dans le serveur, l'accès est accordé. Ce système demande un grand volume de calcul dans le serveur.

Le brevet US 5 361 062 décrit un système d'authentification dans lequel, au moment où une demande d'accès est formulée, une partie de la valeur temporelle disponible dans la carte sur la base de son horloge, est transférée au serveur. L'exemple donné dans ce brevet est la valeur des minutes de l'horloge au moment de l'accès. Lorsque le mot de passe est transféré, cette valeur est utilisée dans le serveur pour examiner si la valeur des secondes de son horloge est inférieure ou supérieure à 30 secondes. Si la valeur est inférieure, le serveur prend la valeur des minutes choisie. Dans le cas contraire, la valeur des minutes dans le serveur est augmentée d'une unité.

Ce processus ne peut fonctionner correctement que si l'horloge de la carte est, soit synchrone avec celle du serveur avec une tolérance prédéfinie, soit retarde par rapport à l'horloge du serveur. En effet, si l'horloge de la carte est en avance sur celle du serveur, ce dernier ne pourra trouver le mot de passe calculé dans la carte au cours de la demande d'accès actuelle, car le serveur n'effectuera des itérations que jusqu'à ce qu'il atteigne celle correspondant à la minute actuelle de sa propre horloge. Dans ce cas, aucune demande d'accès, même formulée légitimement, ne pourra aboutir. Cependant, en incorporant dans les cartes des horloges de faible qualité (ce qui comme déjà signalé ci-dessus est souhaitable pour des raisons de coût de fabrication), il n'est pas possible de déterminer à la fabrication dans quel sens l'horloge d'une carte va dériver par rapport à l'horloge du serveur, en particulier en raison du fait que la dérive peut être provoquée par des phénomènes totalement imprévisibles, comme par exemple les variations de température à laquelle la carte peut être soumise.

Un autre inconvénient du système selon le brevet US 5 361 062 consiste en ce que l'unité temporelle élémentaire rythmant les itérations du calcul du mot de passe ne peut être choisie à une valeur faible, car plus cette unité temporelle est petite, et plus lourde sera la charge de calcul tant pour les cartes que pour le serveur. Par conséquent, en pratique, cette unité temporelle à été fixée entre 1 et 10 minutes. Ceci signifie que chaque mot de passe engendré dans la carte reste valable pendant toute la durée de cette unité temporelle. Il en résulte une moins bonne sécurité du système. En fait, un fraudeur peut obtenir un mot de passe en l'interceptant sur la liaison entre la carte et le serveur et obtenir une autorisation d'accès, car il sera en possession du mot de passe exact.

La demande de brevet EP 0 234 954 décrit un système de contrôle d'accès dans lequel l'utilisateur transmet au serveur une donnée de synchronisation relative au nombre de demandes d'accès formulées précédemment. Plus précisément, si après calcul des mots de passe dans la carte et dans le serveur, il y a non-concordance, le serveur affiche une donnée temporelle relative à la demande d'accès faite à l'aide de la carte concernée. Cette donnée doit être introduite dans la carte par l'utilisateur afin que le même nombre de demandes d'accès soit enregistré dans cette carte et dans le serveur. Ce système de l'art antérieur présente l'inconvénient que l'utilisateur est mis à contribution pour la procédure de synchronisation, et que le nombre de demandes d'accès formulées auparavant est divulgué à un éventuel fraudeur, alors que ce nombre sert pour calculer le mot de passe. Il serait donc préférable de le tenir secret.

On connaît par EP 0215291 un système d'authentification de messages comprenant au moins une première unité portable personnalisée pour un utilisateur et au moins une seconde unité de vérification capable de délivrer une fonction d'authentification pour authentifier lesdits messages, dans laquel:

(A) ladite première unité comprend:

- des premiers moyens générateurs pour engendrer au moins une première variable;
- des premiers moyens de calcul destinés à produire un premier mot de passe à l'aide d'au moins un premier algorithme de chiffrement utilisant une clé de chiffrement pour chiffrer au moins ladite première variable;
- des moyens de transmission pour transmettre ledit premier mot de passe à ladite seconde unité;

(B) ladite seconde unité comprend:

- des seconds moyens générateurs pour, en réponse à une demande d'authentification faite par une spécifiée desdites premières unités, engendrer au moins une seconde variable assignée à ladite première unité;
- des seconds moyens de calcul pour produire un second mot de passe à l'aide d'au moins un second algorithme de chiffrement utilisant une clé de chiffrement pour chiffrer au moins ladite seconde variable, lesdites première et seconde variables étant produites de concert, mais de façon indépendante dans lesdites première et seconde unités;
- des moyens pour comparer lesdits premier et second mots de passe;
- des moyens pour, dans le cas ou lesdits mots de passe présentent une cohérence prédéterminée, délivrer ladite fonction d'authentification; et

(C) ladite seconde unité comprend galement des moyens de substitution pour, sur la base de la valeur actuelle de ladite seconde variable, engendrer une valeur substituée.

L'invention a pour but de fournir un système d'autorisation dépourvu des inconvénients des solutions antérieures décrites ci-dessus.

L'invention prévoit donc de fournir un système d'authentification dans lequel chaque carte peut fournir de l'information de synchronisation au serveur de sorte que ce dernier soit capable de se synchroniser sur l'horloge dans chaque carte, à condition que les dérives relatives des horloges respectives des cartes et du serveur restent à l'intérieur de limites prédéfinies.

Grâce au système d'authentification tel que défini dans la revendication 1, les variables soumises au chiffrement dans la carte et dans le serveur peuvent être mises en concordance l'une par rapport à l'autre afin de permettre la production de mots de passe qui soient identiques ou du moins qui présentent entre eux une relation prédéterminée, et ce pour chaque demande d'accès formulée malgré les dérivés que ces variables peuvent subir.

De façon analogue à celle décrite dans la demande de brevet déposée ce jour au nom de la Demanderesse et ayant pour titre "Système de contrôle d'accès à une fonction, dans laquelle le chiffrement implique plusieurs variables dynamiques", les moyens de calcul de la seconde unité peuvent employer un algorithme de chiffrement différent de celui des moyens de calcul de la première unité. Par exemple, l'algorithme dans la seconde unité peut être un algorithme de déchiffrement appliqué au premier mot de passe afin de dériver la première variable engendrée dans la première unité, variable qui est comparée dans la seconde unité à la seconde variable qui y est engendrée.

Si la variable dépend du temps, cette concordance peut n'exiger dans le serveur aucune itération supplémentaire. Si la variable est le nombre de demandes d'authentification formulées par la carte, le nombre d'itérations qui seraient éventuellement nécessaires, resterait limité à une très faible valeur.

D'autres caractéristiques et avantages de l'invention apparaîtront au cours de la description qui va suivre, donnée uniquement à titre d'exemple et faite en se référant aux dessins annexés sur lesquels:

- **-** la figure 1 est un schéma général d'un système d'authentification selon l'invention;
- **-** la figure 2 est un organigramme simplifié illustrant le principe du déroulement des opérations dans l'unité portable ou carte appartenant au système de l'invention, lorsqu'une demande d'authentification est formulée;
- **-** les figures 3, 3A et 3B montrent un organigramme simplifié illustrant le principe du déroulement des opérations dans l'unité centrale ou serveur appartenant au système selon l'invention, lorsqu'une demande d'authentification est formulée;
- **-** la figure 4 est un organigramme partiel illustrant un détail du fonctionnement du serveur concernant la variation en fonction de la durée d'utilisation d'une carte, de la plage de validité imposée à une valeur de synchronisation des horloges;
- **-** la figure 5 est un organigramme d'une première variante d'un détail du fonctionnement du serveur par lequel le système peut s'adapter à la dérive des horloges des cartes au cours de leur utilisation;
- **-** la figure 6 montre une seconde variante de l'adaptation à la dérive des horloges des cartes;
- **-** la figure 7 est un organigramme d'un détail du fonctionnement du serveur concernant une procédure de surveillance de l'importance de la dérive des horloges sur une période de temps prédéterminée;
- **-** la figure 8 montre un organigramme du mode de calcul d'une clé dérivée de chiffrement utilisée pour le calcul du mot de passe.

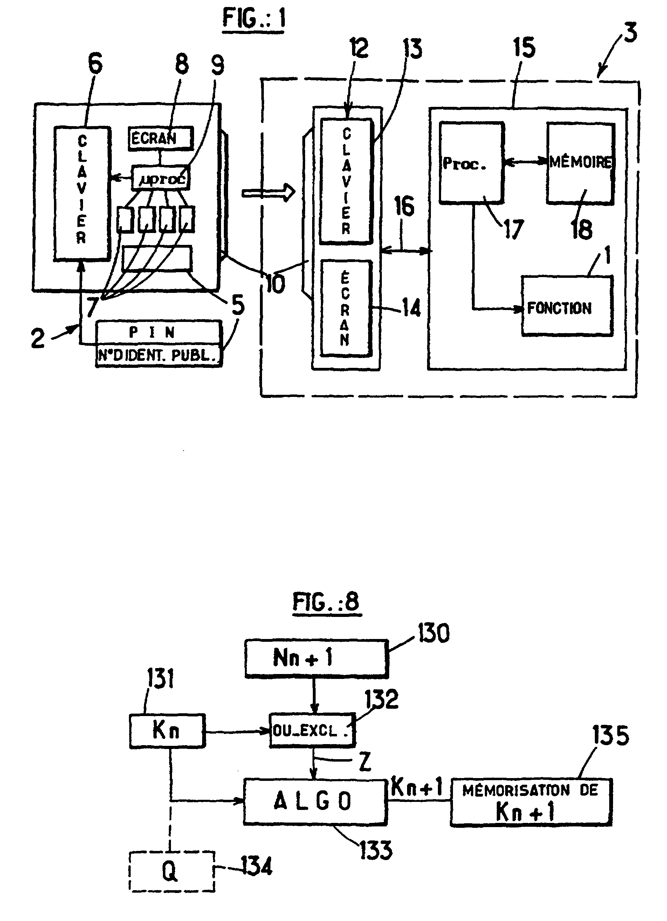

Sur la figure 1, on a représenté un schéma très simplifié d'un système d'authentification ou de contrôle d'accès selon l'invention.

Le système est supposé donner un accès conditionnel à une fonction qui est symbolisée par le rectangle 1 sur la figure 1. Le terme "fonction" doit être pris dans une acception très large. Il désigne toute fonction d'authentification, en particulier une authentification à laquelle l'accès est conditionné par une autorisation impliquant une vérification de la carte à l'aide de laquelle la demande est formulée, et de préférence également une identification de la personne demandant l'accès à la fonction pour savoir si sa demande est légitime.

La fonction peut être de toute nature, par exemple une fonction d'accès à un local, à un réseau informatique ou à un ordinateur, à une transaction d'ordre pécuniaire (télé-achat, banque à domicile, jeu télévisé interactif, télévision à péage) etc. Par ailleurs, des fonctions d'authentification de messages tombent expressément dans la portée de la présente invention.

Ceci étant, on voit sur la figure 1 que selon un mode de réalisation particulier, le système suivant l'invention peut comporter au moins une première unité 2 appelée "carte" et au moins une seconde unité 3. On notera que le système de contrôle d'accès selon l'invention peut comporter un grand nombre de premières unités et une ou plusieurs secondes unités, mais en tout cas en un nombre généralement nettement plus faible. Les nombres d'unités 2 et 3 ne sont donc nullement limitatifs de l'invention.

La première unité ou carte 2 est de préférence portable et personnalisée pour être affectée personnellement à un utilisateur donné. Elle se présente par exemple sous la forme d'une calculette ou d'une carte de crédit et elle porte un numéro d'identification publique 5 indiqué schématiquement sur la figure 1. Ce numéro peut y être inscrit en clair et y être affecté au moment de son initialisation. Il peut également être formé par le nom de l'utilisateur ou par toute autre information propre à celui-ci. Le numéro d'identification personnelle ou PIN, est secret et normalement connu seulement de l'utilisateur autorisé de la carte. Dans le mode de réalisation préféré, pour utiliser la carte, le numéro PIN doit y être introduit par l'utilisateur, la carte comparant le numéro PIN introduit à une valeur qui y est mémorisée. Si le numéro PIN introduit et la valeur mémorisée concordent, l'utilisateur reçoit l'autorisation d'utiliser la carte; sinon la carte ne fonctionnera pas pour générer un mot de passe. Quant au numéro d'identification publique, il identifie la carte elle-même vis-à-vis de l'unité 3 parmi toutes les cartes avec lesquelles le système est appelé à travailler.

La carte 2 comporte un clavier 6 destiné à permettre l'introduction d'informations, telles que par exemple les numéros d'identification déjà mentionnés, ainsi que diverses touches de fonction 7. Elle comporte également un écran d'affichage 8 et est dotée d'un circuit intégré 9 comportant notamment un microcontrôleur dûment programmé ainsi que les mémoires ROM et RAM habituelles.

La carte 2 comporte également un dispositif de communication 10 permettant de communiquer avec la seconde unité 3, soit directement, soit par une liaison de transmission à plus ou moins longue distance. Ce dispositif peut se présenter sous de nombreux aspects par exemple une liaison téléphonique en DTMF, un dispositif de transmission de données par rayons infrarouges, un dispositif dit "en mode connecté" dans lequel la carte est insérée dans un lecteur approprié ou tout autre dispositif de transmission bien connu dans la technique.

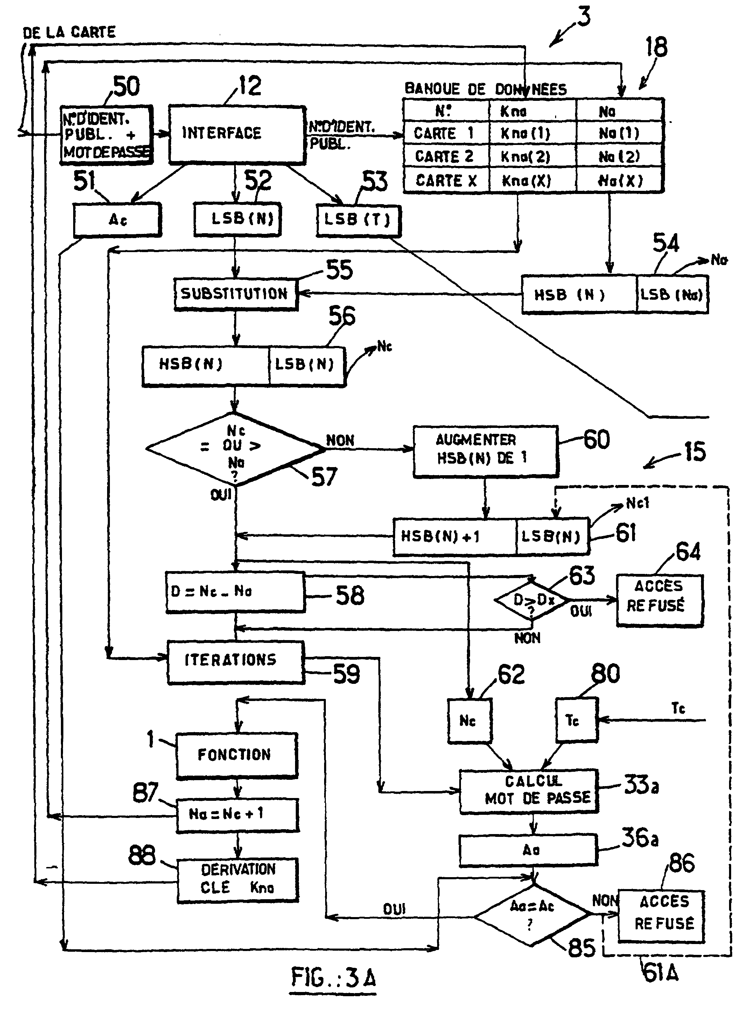

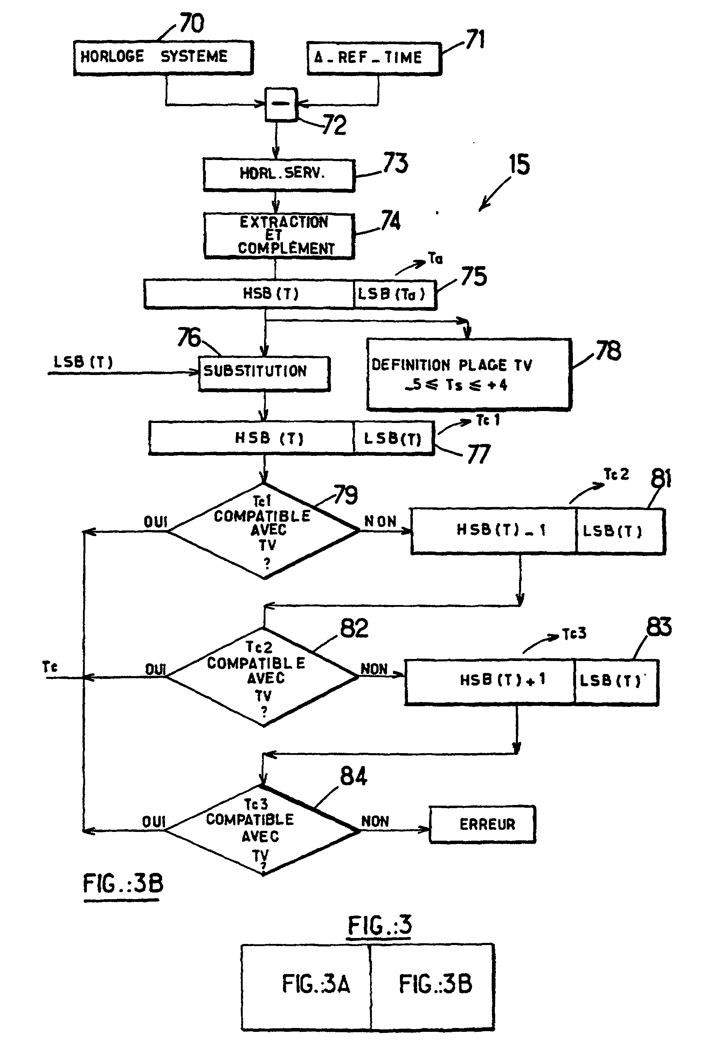

La seconde unité 3 englobe tout d'abord des moyens d'interface permettant d'assurer la communication avec la carte 2. Dans le mode de réalisation représenté sur les figures 1 et 3B, ces moyens d'interface sont symbolisés par un rectangle 12; ils peuvent se présenter sous de nombreuses formes. Il peut s'agir par exemple d'un lecteur dédicacé spécialement, mais il peut également se présenter sous la forme d'un terminal d'ordinateur inséré par exemple dans un réseau, ou encore un ordinateur personnel équipé d'une interface à rayons infrarouges, etc. Leur particularité est qu'ils peuvent communiquer sous une forme appropriée avec la ou les cartes qui leur est ou sont associée(s).

Les moyens d'interface 12 peuvent comprendre un clavier 13 et un écran d'affichage 14 pour permettre à un utilisateur d'introduire des informations à communiquer à une partie 15 de la seconde unité 3, telles que par exemple des mots de passe ou des données à authentifier relatives à la fonction 1. Toutefois, l'introduction de ces informations et/ou ces données peut être réalisée d'autres manières, notamment automatiquement sans intervention manuelle de l'utilisateur, par exemple par la simple introduction de la carte dans l'interface 12 ou par l'un des boutons de fonction 7 provoquant par exemple l'émission de rayons infrarouges modulés.

L'interface 12 communique avec l'autre partie 15 de la seconde unité 3 appelée "serveur" dans la présente description. Cette communication symbolisée par la connexion 16 peut se faire à courte ou à longue distance par tout moyen approprié. Les informations circulant sur cette connexion sont notamment le mot de passe à contrôler dans le serveur 15 et éventuellement des données ou des messages à authentifier et à exploiter dans le serveur.

Le serveur 15 comporte en particulier un processeur 17 et une mémoire ou banque de données 18. Le processeur est capable de libérer conditionnellement les fonctions 1, visées par les demandes d'accès formulées par les diverses cartes, ces fonctions pouvant être assurées à l'intérieur du serveur (comme représenté sur la figure 1) ou à l'extérieur. A noter que le serveur coopère généralement avec un grand nombre de cartes par l'intermédiaire d'interfaces telles que l'interface 12.

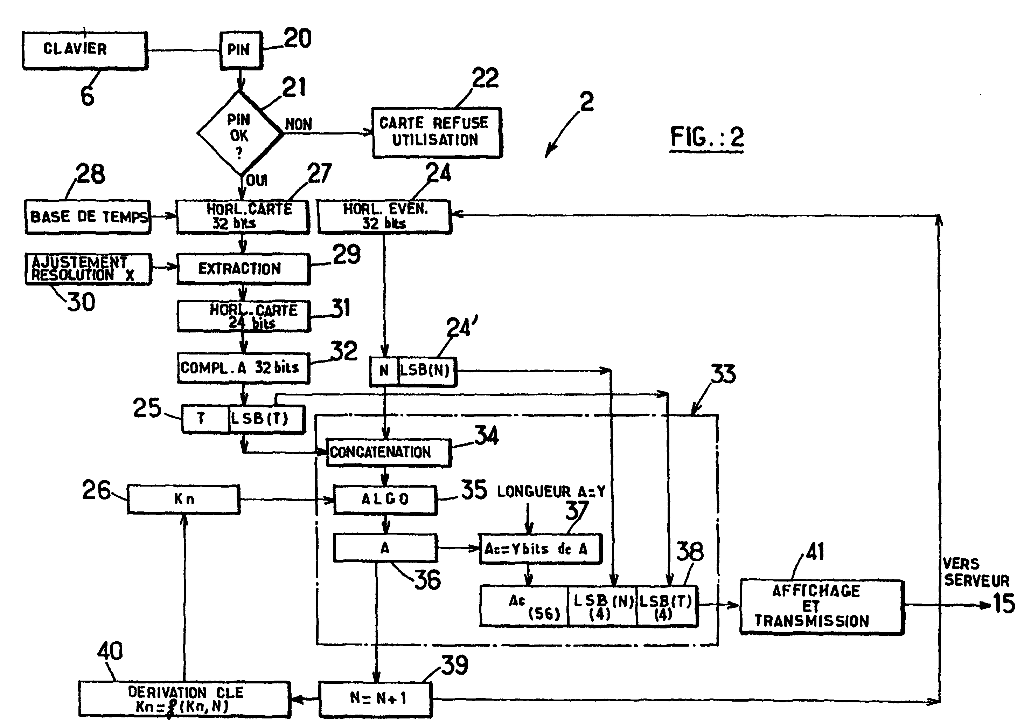

La figure 2 représente un organigramme simplifié des diverses opérations qui se déroulent lorsqu'une demande d'accès à une fonction est formulée par l'utilisateur d'une carte.

Pour initier la procédure, le numéro d'identification publique 5 doit être communiqué au serveur 15. Cette opération peut être réalisée de diverses manières. Par exemple, il peut être communiqué directement au serveur dès lors que la carte est insérée dans l'interface 12. Il peut être directement tapé sur le clavier 13 de celui-ci par l'utilisateur lui-même, ou bien sur le clavier 6 de la carte 2 et transféré par le dispositif de communication 10. La communication peut également se faire par une liaison à distance, telle qu'une ligne téléphonique ou par voie hertzienne.

L'utilisateur doit également donner sa légitimation en tapant en 20 son code d'identification personnelle ou code PIN sur le clavier 6 de la carte. Le code tapé est comparé en 21 avec un code PIN stocké dans la mémoire de la carte. En cas de non-concordance, la carte refuse toute utilisation en 22, l'utilisateur pouvant se voir allouer éventuellement plusieurs tentatives consécutives avant qu'un refus définitif lui soit opposé, si elles restent toutes infructueuses.

Si au contraire le code PIN introduit et le code PIN mémorisé concordent, le programme déclenche l'opération de calcul du mot de passe.

Ce calcul consiste en un chiffrement à l'aide d'un algorithme de chiffrement qui peut être secret ou publique. Dans ce dernier cas, il peut s'agir d'un algorithme appelé DES (Data Encryption Standard) par les spécialistes de cette technique, le DES étant un algorithme publique travaillant avec une clé secrète.

Selon la demande de brevet précitée, l'algorithme utilise des paramètres d'entrée fonctions de variables dynamiques qui dans un mode de réalisation particulier sont au nombre de trois. Ce concept est également utilisé dans le mode de réalisation décrit dans la présente description. Parmi ces variables dynamiques, une première est une variable N mémorisée dans un registre ou compteur 24 (figure 2) et fonction d'un nombre de demandes d'accès faites par la carte et une variable temporelle T mémorisée dans un registre ou compteur 25. Chaque variable est présentée sous 32 bits par exemple. Elles peuvent représenter la valeur réelle du nombre de demandes d'accès ou du temps ou également une valeur résultant de l'application de toute fonction mathématique à ces variables. La troisième variable dynamique est une clé de chiffrement secrète Kn utilisée par l'algorithme pour chiffrer les deux variables que l'on vient de mentionner. En variante, l'algorithme peut également produire une valeur en fonction des valeurs actuelles de Kn, N et T, ou Kn est chiffré avec une clé comprenant une valeur fonction de N et de T. La clé de chiffrement Kn est mémorisée dans un registre 26 et elle est mise à jour à chaque demande d'accès, comme expliqué plus loin à propos de la figure 8.

La variable T à chiffrer est issue d'un compteur de temps 27 qui est piloté par une horloge de base 28 de la carte dont la sortie est divisée de manière que le compteur 27 soit incrémenté avec une résolution temporelle prédéterminée, par exemple toutes les 0,5 secondes. Le nombre contenu dans le compteur 27 est soumis à une opération d'extraction en 29 par laquelle en est séparé un nombre prédéterminé de digits de poids le plus faible (ou 8 bits dans l'exemple, ou plus généralement les digits de poids le plus faible de tout système de numération comme le système de numération binaire, hexadécimal etc.). Ces digits sont rejetés et ne sont plus utilisés pour le calcul du mot de passe. Le rang du digit de poids immédiatement supérieur par rapport aux digits rejetés détermine une résolution temporelle dont l'unité temporelle correspondant sera appelée X par la suite, et avec lequel le mot de passe pourra être calculé.

Selon l'un des aspects de la présente invention, il est prévu de rendre réglable le nombre de digits rejetés pour permettre un choix de cette résolution que l'on pourra ainsi déterminer par programmation (symbolisée par le bloc 30 sur la figure 2), par exemple à l'initialisation de la carte en fonction du degré de sécurité que l'on souhaite y affecter ou éventuellement au cours de l'utilisation de la carte. En effet, plus la résolution est élevée, et plus la durée de validité d'un mot de passe calculé à un instant donné sera courte. Comme un fraudeur aura ainsi moins de temps disponible pour s'en emparer et éventuellement l'utiliser à la place de l'utilisateur légitime de la carte, la sécurité est renforcée d'autant plus que la résolution est importante.

Le nombre de digits restants (24 bits en l'occurrence) symbolisé en 31 est soumis à une opération de complémentation à 32 digits, par laquelle le nombre correspondant reçoit un certain nombre de digits (8 digits de valeur 0 dans l'exemple) sur ces rangs de poids le plus fort. Le nombre réel de digits reçus correspondra naturellement au nombre de digits séparés dans le module d'extraction 29.

Le nombre résultant est la seconde variable proprement dite qui va être soumise au chiffrement. Il est stocké dans le registre 25. On notera que le digit de poids le plus faible constitue l'unité temporelle X qui détermine le résolution dont il a été question. Si le système travaille en numération binaire et si le pas du compteur 27 est de 0,5'', comme indiqué ci-dessus à titre d'exemple, l'unité temporelle X peut avoir des valeurs de 0,5'', 1'', 2'', 4'', 8'' etc.

Le contenu du registre 24 représentant le nombre de demandes d'authentification (appelé parfois nombre d'événements par les spécialistes) effectuées est placé dans un registre 24'.

Les deux variables T et N ainsi engendrées sont soumises au chiffrement selon un processus de calcul de mot de passe schématisé dans le rectangle en traits mixtes 33.

Ce calcul implique en 34 une concaténation ou toute autre combinaison mathématique et/ou logique des deux variables N et T à partir des registres 24' et 25, puis le chiffrement par l'algorithme en 35, ce dernier pouvant être un algorithme secret ou publique (DES). Le calcul engendre un résultat A en 36 dont en 37 est ôté un groupe de digits de poids le plus faible ou de poids le plus fort. Le nombre de digits de ce groupe est fixé par une valeur prédéterminée "longueur A" ou Y (choisie à 56 dans l'exemple). Cette opération engendre la valeur Ac.

En 38, cette valeur Ac est complétée avec des groupes de digits de poids le plus faible LSB(N) et LSB(T) des valeurs contenues dans les registres 24' et 25 respectivement (dans l'exemple, chacun de ces groupes comporte 4 digits).

Le chiffrement effectué par les opérations globalement désignées par le rectangle 33 engendre en 39 une nouvelle valeur de la variable N, la valeur actuelle N étant augmentée par exemple d'une unité. En variante, la nouvelle valeur de N peut être obtenue en augmentant chaque fois la valeur actuelle de deux unités (ou de toute autre valeur quelconque). Par ailleurs, la valeur d'augmentation peut être modifiée à chaque demande d'accès. Il est clair que l'augmentation elle-même ainsi que la façon d'augmenter doivent être les mêmes dans la carte et dans le serveur.

La nouvelle valeur de N est utilisée pour une opération de calcul en 40 destinée à élaborer la nouvelle valeur Kn+1 de la troisième variable dynamique ou clé de chiffrement secrète. Le résultat de cette opération en 40 est substitué à l'ancienne clé Kn dans le registre 26 pour être utilisée lorsqu'une nouvelle demande d'authentification est présentée.

La valeur obtenue en 38 est affichée sur l'écran 8 de la carte 2 pour être communiquée au serveur 15 par exemple en tapant le mot sur le clavier 13 de l'interface 12. Cette communication peut également être réalisée automatiquement par le biais des liaisons 10 et 16 ou par tout autre moyen de communication approprié (bloc 41).

En se référant à la figure 3, on va maintenant décrire le déroulement des opérations effectuées par la seconde unité 3 pour traiter une demande d'authentification donnant accès à la fonction 1, formulée comme décrit ci-dessus par une carte 2.

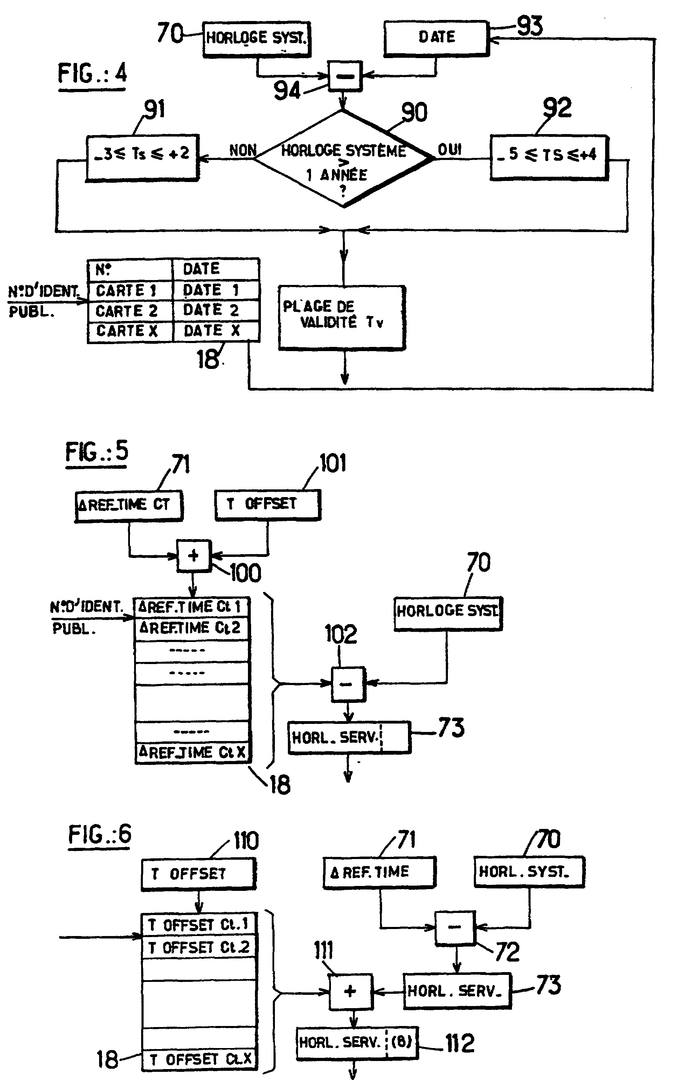

Le serveur 15 conserve dans sa mémoire ou banque de données 18 une table contenant plusieurs valeurs propres à chaque carte 2 (voir aussi les figures 4 à 7). Ainsi, pour chacune des cartes 1, 2....x du système , la mémoire 18 contient notamment la valeur actuelle Kna de la clé de chiffrement et la valeur du nombre d'accès effectuées avec cette carte, ces variables étant engendrées de concert avec la production de ces mêmes variables dans la carte, leur relation pouvant être d'un type prédéterminé quelconque, l'identité étant la relation préférée et utilisée dans le mode de réalisation décrit. On notera à cet égard que ces variables ne sont jamais transférées des cartes au serveur, ni vice-versa et ne circulent donc jamais sur les lignes de transmission 10 et 16.

Lors de la communication du mot de passe composé des éléments Ac, LSB(T) et LSB(N), le numéro d'identification publique de l'utilisateur (bloc 5 de la figure 1) est également transmis au serveur 15 pour lui permettre d'extraire de sa mémoire les valeurs Kna et Na concernant la carte en question (bloc 50 de la figure 3). Les composantes du mot de passe sont alors restituées comme symbolisé respectivement en 51, 52 et 53.

En ce qui concerne le nombre de demandes d'accès, on doit noter qu'il peut y avoir une dérive entre celui décompté dans la carte 2 et celui décompté dans le serveur 15. En effet, il se peut que l'utilisateur de la carte 2 formule une demande d'authentification sans l'achever, autrement dit sans par exemple transférer le mot de passe à la seconde unité 3. Ceci pourrait également être fait avec de mauvaises intentions par un fraudeur soucieux de perturber le système. Il est clair qu'une telle disparité entre le nombre comptabilisé dans la carte et celui compté dans le serveur ne peut aller que dans un sens, l'excédant se trouvant donc toujours dans la carte.

Comme le nombre de demandes d'accès constitue l'une des variables soumises au chiffrement dans la carte et dans le serveur et que, par ailleurs, dans le mode de réalisation décrit la clé de chiffrement dépend de ce nombre, une demande d'accès complète suivant une ou plusieurs demandes d'accès non achevées doit donner lieu dans le serveur à un calcul itératif du mot de passe jusqu'à ce que la différence entre les nombres comptabilisés des deux côtés soit compensée.

La valeur Na extraite en 54 de la mémoire 18 est donc soumise en 55 à une opération de substitution pendant laquelle la valeur LSB(Na) provenant de la mémoire 18 est remplacée par la valeur LSB(N) provenant de la carte 2, le restant HSB(N) de la valeur Na étant par hypothèse la même que celui de la variable N dans la carte 2. Cette opération engendre une valeur symbolisée près du bloc 56 et appelée Nc. Ainsi, cette variable Nc comprend un premier groupe substitué de digits de poids le plus faible LSB(N) et un groupe de digits de poids le plus fort HSB(N) ou valeur HSB(N).

Cette valeur Nc est soumise en 57 à un test pour déterminer si elle est strictement inférieure à la valeur Na extraite de la mémoire 18. Si elle est supérieure ou égale à cette valeur, le test est affirmatif et le processus passe à une opération de soustraction en 58 afin de calculer la différence D entre les valeurs Nc et Na. Le résultat détermine le nombre d'itérations nécessaires pour que le serveur "rattrape" par des calculs de mot de passe successifs le nombre correspondant dans la carte. Si la différence D est égale à zéro, il n'y avait aucune différence entre les nombres d'accès comptabilisés respectivement dans la carte et dans le serveur, si bien qu'aucune itération n'est alors nécessaire. Dans le cas contraire, les itérations requises sont effectuées en 59.

Si le test 57 aboutit à une réponse négative, on incrémente en 60 la valeur HSB(N) pour retrouver une valeur substituée et ajustée Nc1 (bloc 61). Cette valeur est alors prête en 62 pour servir de variable dynamique à chiffrer. Il convient de noter que la modification de la valeur HSB(N) doit être faite en accord avec le processus particulier choisi dans la carte (augmentation d'une ou de deux unités etc.) pour la dérivation de la nouvelle valeur de la variable N, processus qui est exécuté dans le module 39 de la figure 2 décrite ci-dessus.

Les exemples concrets suivants permettent de comprendre ce mécanisme, le raisonnement étant fait par commodité en numération décimale. (Il sera analogue pour tout autre système de numération). On rappelle que N sera toujours supérieur ou égal à Na.

Si N=Na=22, par exemple, LSB(N)=LSB(Na) et le test en 57 sera affirmatif. D=0 et aucune itération n'est nécessaire et la valeur Nc est directement utilisée (bloc 62).

Si N=24 et N=22, LSB(N) transmis avec le mot de passe sera 4 et Nc=24. D en 58 sera égal à 2, deux itérations seront nécessaires pour que Na devienne égal à N et Nc également égal à 24.

Si N=31 et Na=22, LSB(N) transmis avec le mot de passe sera 1 et Nc en 56 sera égal à 21. Le test en 57 sera négatif, car Nc<Na. Par conséquent, la valeur HSB(N) sera augmentée d'une unité et une valeur Nc1 égale à 31 est engendrée. D=9 et neuf itérations seront nécessaires pour que Na devienne égal à Nc (31). Toutes les itérations étant effectuées, D-O et Nc aura la valeur convenable pour que le chiffrement puisse être effectué (bloc 62).

On peut noter à ce stade qu'en tout état de cause, le nombre d'itérations nécessaires sera toujours relativement faible comparé au nombre d'itérations nécessaires dans le système du brevet US 5 361 062 précité dans lequel la clé de chiffrement est elle-même fonction du temps. Dans l'exemple que l'on vient de décrire dans lequel la valeur HSB(N) peut être augmenté d'une unité, la différence maximale admissible D est égale à 9 et l'accès sera refusé si D≥10 (en unités décimales). Il est éventuellement possible d'imposer une limite à la dérive du nombre de demandes d'accès comptabilisé dans le serveur 15 par rapport à celui dénombré dans la carte 2. La valeur D peut donc être soumise à un test en 63 pour vérifier si elle est supérieure à une valeur Dx constituant la différence maximale admissible. S'il est constaté que cette valeur est dépassée, l'accès pourra être refusé en 64.

Si la différence maximale Dx est supérieure à 9 (Dx≥10), il peut être nécessaire d'incrémenter HSB(N) d'une valeur supérieure à l'unité. Dans un tel mode de réalisation, l'accès n'est pas refusé par le module 86, lorsque le test en 85 est négatif, mais la valeur HSB de Nc est incrémentée d'une unité supplémentaire comme représenté par les traits en pointillés 61A sur la figure 3A. La différence entre la nouvelle valeur de Nc et Na est calculée (module 58) et l'accès est refusé si D>Dx (module 63). Si D≤Dx, le processus se poursuit comme décrit ci-dessus jusqu'à ce que avec Aa=Ac, l'accès soit accordé (module 85) ou avec Aa≠Ac, l'accès soit refusé (module 86).

Il est à noter que la valeur HSB(N) peut également être modifiée d'autres façons que par incrémentation d'une unité pour retrouver la valeur Nc conformément aux diverses variantes d'incrémentation de la variable N. Autrement dit, cette modification peut être faite conformément à toute fonction mathématique appropriée.

Avant de décrire le processus d'établissement de la variable temporelle dans le serveur, il convient de préciser que le système de contrôle d'accès selon l'invention connaît un temps de référence REF-TIME par rapport auquel toutes les cartes et le ou les serveurs sont référencés. Ce temps est par exemple l'instant où le système est mis en service pour la première fois (par exemple le 1 janvier 1996 à 00h00'00").

Le serveur comporte une horloge de base 70 ou horloge système (figure 3B) dont la précision est en principe nettement plus élevée que celle des horloges des cartes 2. Un registre 71 contient la différence entre la position de cette horloge et l'heure de référence REF-TIME, cette différence étant appelée ΔREF-TIME.

Le serveur 15 établit en 72 la différence entre la valeur de son horloge de base et la valeur ΔREF-TIME, ce qui donne lieu en 73 à une valeur HORL.SERV. d'horloge de serveur établie sur 32 digits. Cette valeur d'horloge HORL.

SERV. présente la même résolution temporelle que la valeur HORL.CARTE contenue dans le compteur 27 (0,5" dans l'exemple décrit). A l'initialisation de chaque carte, la valeur HORL.CARTE qui représente la différence entre le temps actuel et la valeur ΔREF-TIME est chargée dans le registre 27 (figure 2) de la carte considérée. En d'autres termes, si toutes les horloges étaient idéales et sans dérive, on aurait à chaque instant une égalité entre les valeurs HORL. CARTE et HORL.SERV. des registres 27 et 73.

En réalité, toutes les horloges ont une dérive qui est plus importante pour celles des cartes que pour celle(s) de ou des serveurs du système.

On va tout d'abord examiner comment le système selon l'invention se synchronise sur chaque carte au moment d'une demande d'authentification afin d'aboutir à un mot de passe compatible avec celui calculé dans la carte pendant cette demande d'authentification, malgré la dérive relativement importante que l'horloge de la carte peut présenter.

On a déjà vu que le mot de passe calculé dans la carte est accompagné d'un groupe de digits LSB(T), lorsqu'il est transmis au serveur. Ce groupe de digits (quatre bits dans l'exemple décrit) constitue une information de synchronisation qui est exploitée de la façon suivante dans le serveur 15.

La valeur actuelle HORL.SERV. du registre 73 est soumise à plusieurs opérations en 74 qui sont identiques à celles effectuées dans la carte 2 et schématisées par les modules 29 à 32 de la figure 2. Elles ne sont donc pas détaillées sur la figure 3B.

La valeur résultante est symbolisée dans le bloc 75. Un groupe de digits LSB(Ta) de poids le plus faible (quatre bits dans l'exemple; valeur Ts) est ôté de cette valeur résultante et remplacée par la valeur LSB(T) du bloc 53, opération qui est symbolisée par le bloc 76. Cette substitution engendre une valeur substituée Tc1 inscrite dans le module 77. Elle comporte donc la valeur de synchronisation LSB(T) envoyée par la carte au serveur pendant le transfert du mot de passe Ac. Cette dernière valeur constitue un groupe de digits de poids le plus faible. Le reste des digits de la valeur substituée Tc1 forme un groupe de digits HSB(T) de poids le plus fort.

Le serveur contient dans sa mémoire 18 une information ou plage de validité Tv (qui est formée par la différence entre la valeur Ta et la valeur T) pour la valeur de synchronisation qui de ce fait est soumise à un seuil. Selon deux protocoles de calcul distincts, cette plage de validité Tv peut se présenter sous les formes suivantes :

$$-5 \leq Ts \leq +4 \text{ (bloc 78)}$$

ou

$$Ta - 5 \leq Tc1 \text{ (ou Tc2 ou Tc3)} \leq Ta+4$$

Ts étant la différence entre la valeur Ta et la valeur Tc1 déterminée en particulier par la valeur LSB(T) provenant de la carte 2. On notera -que la plage de validité Tv est de préférence réglable, ce qui sera décrit plus en détail par la suite à propos de la figure 4.

La valeur substituée Tc1 présente dans le module 77 est soumise à un processus de synchronisation au moyen duquel elle est modifiée, le cas échéant, en fonction de la plage de validité Tv afin de compenser la dérive que présente le contenu du compteur ou registre 27 par rapport à celui du compteur ou registre 73 du serveur 15.

Ce processus commence par un test en 79 pour vérifier si la valeur Tc1 est compatible avec la plage de validité Tv. En considérant le premier protocole de calcul mentionné ci-dessus, cette opération implique d'abord le calcul de la différence entre les valeurs Ta et Tc1 cette différence étant soumise à une comparaison avec la première plage de validité Tv mentionnée ci-dessus.

Si la réponse au test en 79 est affirmative, cela signifie que la différence tombe dans la plage si bien qu'il y a compatibilité avec elle. En effet, dans ces conditions, Ta=Tc1 de sorte que Tc1 peut être utilisée en 80 pour le chiffrement en tant que variable Tc (figure 3A).

Dans le cas contraire, une opération en 81 soustrait une unité du digit de poids le plus faible du groupe de digits HSB(T) et le résultat Tc2 (qui est une première variable substituée et ajustée) est de nouveau soumis à un test en 82 pour vérifier s'il est compatible avec la plage Tv. Si la réponse est affirmative, ce sera cette valeur Tc2 qui sera adoptée en 80 pour le chiffrement sous la forme de la variable Tc.

Dans le cas contraire, une opération symbolisée en 83 incrémente d'une unité dans la valeur Tc1 le digit de poids le plus faible du groupe de digits HSB(T). Le résultat Tc3 (qui est une seconde variable substituée et ajustée) est de nouveau soumis à un test en 84 pour vérifier s'il est compatible avec la plage de validité Tv. Si la réponse est affirmative, le résultat est adopté en 80 en tant que variable Tc pour effectuer le chiffrement. Les tests 82 et 84 sont identiques au test 79 et ils impliquent donc également le calcul de la différence entre la valeur substituée Ta et la valeur substituée et ajustée Tc2 ou Tc3, respectivement, puis une comparaison de cette différence avec la plage de validité Tv.

Un exemple concret permettra de comprendre cette procédure de synchronisation selon le premier protocole de calcul qui produit la valeur actuelle Tc pouvant être utilisée pour calculer le mot de passe dans le serveur 15. Cet exemple est résumé dans le tableau 1 ci-dessus est il est basé sur la numération décimale (Aa étant le mot de passe calculé dans le serveur (modules 33a à 36a)).

TABLEAU 1

| Registre 25 (Tc) carte 2 | LSB(T) | Registre 75 (Ta) serveur 15 | Calcul Tests 79, 82 et 84 |
|---|---|---|---|
| ...22 | 2 | ...25 | Tc1=...22 Ta-Tc1=+3⇒ calculer Aa |
| ...19 | 9 | ...22 | Tc1=...29 Ta-Tc1=-7 Tc2=...19 Ta-Tc2=3⇒ calculer Aa |
| ...22 | 2 | ...18 | Tc1=...12 Ta-Tc1=6 Tc2=...02 Ta-Tc2=16 Tc3=...22 Ta-Tc3=-4⇒ calculer Aa |

On voit donc dans cet exemple que le système accepte une plage de validité de 10 fois l'unité temporelle X qui est centré sur la valeur Ta constituant le contenu du registre 75. Si l'unité temporelle X est égale à 128'' ou 2'8'' par exemple, la plage de validité s'étend sur 21'20''. En supposant que la dérive maximale par jour dans la carte est de ± 0,5' et si la durée de vie de la carte est de deux ans, la dérive maximale de la carte sera de ± 6'. En supposant également que l'erreur à l'initialisation du compteur 27 de la carte est de ± 1' et que l'erreur de l'horloge 73 du serveur 15 par rapport au temps de référence à chaque instant est de ± 1', la différence maximale à chaque instant entre l'horloge de la carte et celle du serveur sera de ± 8'. Cette différence maximale (± 8') se trouve à l'intérieur de la plage de validité (21'20'') mentionnée ci-dessus. Si la plage de validité est choisie avec une étendue de plus de 10 unités temporelles X, il faudra exécuter un processus similaire à celui mis en oeuvre pour le nombre de demandes d'accès N, lorsque la différence maximale admissible Dx>9. Ceci veut dire que la valeur HSB(T) peut être incrémentée ou décrémentée de plus d'une unité. Naturellement dans ce cas, si le test fait en 85 sur la base de la valeur incrémentée est négatif, il devra être répété sur la base de la valeur décrémentée à condition que tant la valeur incrémentée que la valeur décrémentée tombent dans la plage de validité. On doit noter également qu'à l'image du processus suivi pour le nombre de demandes d'accès N, le calcul temporel peut impliquer, au lieu d'une incrémentation ou d'une décrémentation par une unité de la valeur HSB(T), toute autre modification de cette valeur mettant en oeuvre toute fonction mathématique appropriée.

On doit également noter que si le défaut de synchronisation en ce qui concerne tant le nombre de demandes d'accès N que le temps T, dépasse les plages corrigeables décrites ci-dessus, la carte et le serveur ne pourront engendrer des mots de passe concordants. La carte devra alors être ré-initialisée avant de pouvoir être utilisée à nouveau.

La plage de validité (de 21'20'' dans l'exemple choisi ci-dessus) implique que le processus d'authentification ne sera pas compromis par la dérive des horloges indiquée à titre d'exemple. Il est à souligner toutefois que la sécurité du système reste préservée puisque dans cette plage le système peut calculer potentiellement dix mots de passe différents en se basant lors d'une demande d'accès sur la nouvelle valeur temporelle augmentée de l'unité temporelle X par rapport à la valeur temporelle précédente. On ne conserve donc pas le même mot de passe pendant la plage de validité.

Le calcul du mot de passe dans le serveur 15 à l'aide des variables Nc et Tc ainsi que de la clé de chiffrement Ka se déroule de la même façon que dans la carte en suivant les opérations schématisées dans le rectangle 33 de la figure 2 (bloc 33a de la figure 3A). Il donne lieu à la production du mot de passe Aa en 36a, ce dernier étant soumis à un test de comparaison en 85 pour vérifier s'il est égal au mot de passe Ac transmis à partir de la carte 2 (module 51).

Si le test conclut à une inégalité, l'authentification est refusée en 86. Sinon, l'accès à la fonction 1 est autorisée. Une nouvelle valeur du nombre de demandes d'accès est calculée en 87 (Na=Nc+1) et inscrite dans la mémoire 18. La nouvelle valeur de la clé Ka est également calculée en 88 et inscrite dans la mémoire 18, les deux nouvelles valeurs remplaçant les précédentes dans celle-ci aux adresses correspondant à la carte qui vient de formuler la demande d'authentification. Le calcul des nouvelles valeurs de Na et de Ka est réalisé d'une manière analogue à celle utilisée pour le calcul des valeurs N et K dans la carte comme décrit ci-dessus.

L'étendue de la plage de validité Tv dont il a été question ci-dessus est déterminée par la résolution temporelle c'est-à-dire par l'unité temporelle X choisie (opérations 29 à 31 dans la carte et globalement l'opération 74 dans le serveur. Ainsi par exemple, si on utilise une unité temporelle de 2'8'', la plage s'étend autour de la valeur Ta comme suit:

$$-10'40'' \leq Ta \leq +8'32''.$$

Si on double l'unité temporelle, la plage devient:

$$-21'20'' \leq Ta \leq +17'4''$$

La figure 4 représente une variante de l'invention dans laquelle la plage de validité Tv est rendue variable en fonction du temps d'utilisation de chaque carte. A cet effet, la mémoire 18 du serveur 15 conserve pour chacune des cartes une valeur représentant sa date de mise en service ou d'initialisation. Cette valeur en est extraite en 93 à chaque demande d'authentification à la suite de l'opération 50 (figure 3A). La position de l'horloge 70 du serveur 15 est algébriquement combinée en 94 avec cette valeur et le résultat est soumis à un test en 90 pour vérifier si depuis la date de mise en service, il s'est écoulé une période de temps prédéterminée (1 année par exemple). Tant que la réponse au test reste négatif, la plage de validité Tv établie en 78 (figure 3B) est fixée en 91 dans des limites prédéterminées relativement faibles, par exemple $-3 \leq Ts \leq +2$. Lorsque le test s'avère affirmatif, une année s'est écoulée depuis la mise en service de la carte de sorte que l'on peut admettre une plage de validité plus grande, l'horloge de la carte ayant alors subie une dérive qui reste dans des limites admissibles. La plage de validité Tv est définie avec de nouvelles limites en 92 fixées par exemple à $-5 \leq Ts \leq +4$. Bien entendu, les limites de la plage de validité Tv peuvent être modulées d'autres manières à l'aide d'autres valeurs que celles que l'on vient d'indiquer.

Le processus de synchronisation exécuté dans le serveur 15 à chaque demande d'accès correspond à une certaine valeur de synchronisation qui représente la différence Toffset entre les horloges de la carte 2 et du serveur 15 au temps où une demande d'authentification est formulée. Cette valeur Toffset peut être utilisée dans le serveur pour le calcul du mot de passe. Deux autres variantes du système suivant l'invention représentées sur les figures 5 et 6 permettent de mettre en oeuvre ce processus de recalage et le Tableau 2 ci-dessous l'illustre par un exemple chiffré en unités temporelles X, Toffset1 et Toffset2 étant respectivement les dérives pour une demande d'authentification donnée et pour une demande d'authentification immédiatement suivante. On notera également que dans cet exemple, on utilise le second protocole et la seconde plage mentionnés ci-dessus (seuls les digits de plus faible poids des diverses valeurs ont été indiqués):

TABLEAU 2

| Reg 25 Tc carte | LSB(T) | Reg 75 Ta serveur | Toffset1 | Plage Tv admise pour Tc | Toffset2 |
|---|---|---|---|---|---|
| 22 | 2 | 23 | 0 | 18-27 | -1 |
| 18 | 8 | 23 | -1 | 17-26 | -5 |
| 15 | 5 | 23 | -5 | 13-22 | -8 |
| 19 | 9 | 23 | -8 | 10-19 | -4 |
| 16 | 6 | 23 | -4 | 14-23 | -7 |
| 11 | 1 | 23 | -7 | 11-20 | -12 |
| | | | | 06-15 | |

La mémoire 18 du serveur 15 (figure 5) comporte une section dans laquelle sont enregistrées pour toutes les cartes du systèmes des valeurs $\Delta$REF-TIME particulières. Ces valeurs sont mises à jour pour chaque carte au moment où une demande d'accès s'achève. Pour cela, la valeur générale $\Delta$REF-TIME (module 71) du système est combinée additivement en 100 à la valeur Toffset de la demande d'accès en cours (module 101) et le résultat de cette opération est mémorisée dans la mémoire 18 à une adresse propre à la carte considérée. Pendant une demande d'accès suivante, cette valeur est extraite de la mémoire 18 et soustraite en 102 de la valeur actuelle de l'horloge 70 du système et le résultat est placé dans le registre 73 du serveur pour être utilisé pour cette demande d'accès. Ce processus se déroule individuellement pour chaque carte à chaque demande d'accès que l'on fait avec elle.

Dans la variante représentée sur la figure 6, la valeur Toffset elle-même (module 110) constatée pour une carte donnée pendant une demande d'accès est enregistrée dans la mémoire 18 du serveur 15 au moment où cette demande d'accès s'achève. Elle en est extraite pour la demande d'accès suivante pour être combinée additivement en 111 à la valeur contenue dans le registre 73 pour donner naissance à la valeur corrigée de la valeur d'horloge de serveur (module 112). Celle-ci est utilisée pendant cette demande d'accès suivante pour le calcul effectué dans le serveur 15.

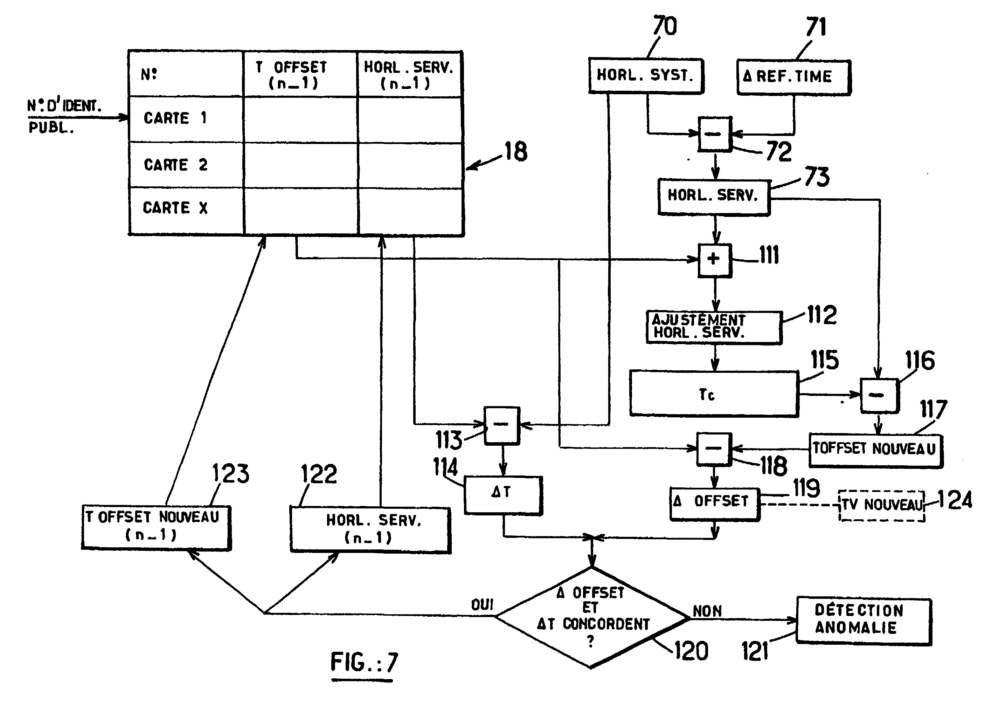

La figure 7 représente une autre variante de l'invention permettant de contrôler l'évolution de la dérive et, le cas échéant, d'en tirer des conclusions sur l'opportunité d'autoriser ou non une utilisation ultérieure de la carte.

La mémoire 18 du serveur 15 mémorise pour chaque carte la valeur de dérive et la position de l'horloge 70 du serveur valables lors de la demande d'accès précédente. La valeur de dérive est utilisée, comme représenté sur la figure 6, pour donner la valeur ajustée (module 112). La valeur précédente de l'horloge 70 est soustraite de la valeur actuelle de celle-ci en 113 pour donner une valeur $\Delta$T qui représente le temps s'étant écoulé depuis la dernière demande d'accès (module 114). Le serveur 15 fait le calcul de la valeur Tc comme décrit précédemment à propos de la figure 3B, l'ensemble des opérations de calcul correspondantes étant résumé sur la figure 7 par le module 115. La combinaison algébrique (module 116) du résultat du calcul et de la valeur du bloc 73 donne alors la nouvelle valeur de la dérive (module 117) constatée pendant la demande d'accès en cours. Cette valeur est combinée algébriquement avec la valeur de dérive précédente extraite de la mémoire 18 (module 118) et le résultat $\Delta$offset (module 119) est confronté à la valeur $\Delta T$ obtenue en 114 au cours d'un test en 120 qui vérifie si l'écart constaté correspond à des critères de cohérence prédéterminés. Par exemple, on peut poser que la dérive ne doit pas dépasser une valeur donnée pendant un laps de temps d'utilisation prédéterminée faute de quoi une anomalie constatée par le serveur 15 conduit à une rejet de la carte en 121 empêchant toute nouvelle demande d'accès. Les nouvelles valeurs de l'horloge et de la dérive sont enregistrées dans la mémoire 18 aux adresses de la carte considérée si le test en 120 s'avère affirmatif (modules 122 et 123, respectivement) pour être utilisées pour la demande d'accès suivante. Le Tableau 3 ci-dessous montre un exemple concret de ce contrôle de dérive, les valeurs étant en unités temporelles de 64" et le calcul tenant compte des imprécisions temporelles inhérentes du système (Les valeurs indiquent seulement les digits de poids le plus faible et le calcul suit le second protocole décrit ci-dessus) :

TABLEAU 3

| Reg 25 Tc | Reg 75 Ta | Dérive carte 2 | Plage Tv admise | Dérive n+1 | $\Delta$ offset | $\Delta T$ (sem.) |
|---|---|---|---|---|---|---|
| 22 | 23 | 0 | 18-27 | -1 | -1 | 3 |
| 18 | 23 | -1 | 17-26 | -5 | -4 | 8 |
| 15 | 23 | -5 | 13-26 | -8 | -3 | 7 |
| 19 | 23 | -8 | 10-19 | -4 | +4 | 7 |
| Détection d'anomalie du sens de la dérive | | | | | | |
| 16 | 23 | -4 | 14-23 | -7 | -3 | 8 |
| 11 | 23 | -7 | 11-20 | -12 | -5 | 1 |
| Accès refusé, anomalie de la dérive trop importante | | | | | | |

La figue 7 illustre encore une autre variante de l'invention selon laquelle la valeur $\Delta$offset est utilisée pour recentrer la plage de validité sur la valeur du module 73. Par exemple, si la dérive se produit dans un sens négatif, la plage sera de $-7 \leq Ts \leq +2$ et dans le cas contraire, elle sera de $-3 \leq Ts \leq +6$, ces valeurs n'étant ici données uniquement à titre illustratif. Ainsi, la valeur obtenue en 119 de la figure 7 sert à définir la nouvelle plage de validité en 124, l'adaptation pouvant se faire à chaque nouvelle demande d'accès.

La figure 8 montre comment la clé de chiffrement Kn (Kna) peut dériver d'une demande à la suivante en fonction de la valeur Nn (Nna) du nombre de demandes formulées, les deux valeurs pouvant être combinées logiquement puis chiffrées pour donner naissance à la clé de chiffrement Kn+1 (Kan+1) utilisée pendant la demande d'accès suivante.

Ces opérations sont réalisées de concert à la fois dans la carte 2 et dans le serveur 15. D'abord, les valeurs Nn+1 et Kn (modules 130 et 131) sont soumises en 132 à une opération de combinaison logique, par exemple une opération OU-EXCLUSIF, ou en variante à une autre fonction mathématique quelconque. La variable intermédiaire Z qui en résulte est soumise à un chiffrement en 133 à l'aide d'un algorithme secret ou publique qui peut éventuellement être le même que celui utilisé en 33 et 33a (figures 2 et 3A). Le chiffrement peut être réalisé à l'aide d'une clé de chiffrement qui est de préférence la valeur de la variable dynamique Kn actuelle, bien qu'une autre clé secrète Q (module 134) puisse également être utilisée.

Le résultat de l'opération de chiffrement en 133 est la nouvelle valeur Kn+1 de la clé de chiffrement qui sera utilisée pour la demande d'accès suivante (module 135).

## Revendications

1. Système d'authentification de personnes et/ou de messages, comprenant au moins une première unité (2) personnalisée pour un utilisateur et au moins une seconde unité (3) de vérification capable de délivrer une fonction d'authentification (1) pour authentifier ladite personne et/ou lesdits messages, dans lequel :

   (A) ladite première unité comprend:

   des premiers moyens générateurs (25 à 32 ; 24,24') pour engendrer au moins une première variable (T,N);
   des premiers moyens de calcul (33) destinés à produire un premier mot de passe (A, Ac) à l'aide d'au moins un premier algorithme de chiffrement (35) utilisant une clé de chiffrement (Kn) pour chiffrer au moins ladite première variable (T, N);
des moyens de transmission (10, 12) pour transmettre ledit premier mot de passe (A, Ac) à ladite seconde unité (3);

(B) ladite seconde unité comprend:

des seconds moyens générateurs (70 à 75 ; 18,54) pour, en réponse à une demande d'authentification faite par une spécifiée desdites premières unités (2), engendrer au moins une seconde variable (Ta, Na) assignée à ladite première unité;
des seconds moyens de calcul (33a) pour produire un second mot de passe (Aa) à l'aide d'au moins un second algorithme de chiffrement utilisant une clé de chiffrement (Kna) pour chiffrer au moins ladite seconde variable (Ta, Na), lesdites première et seconde variables étant produites de concert, mais de façon indépendante dans lesdites première et seconde unités (2, 3);
des moyens (85) pour comparer lesdits premier et second mots de passe (Ac, Aa);
des moyens pour, dans le cas ou lesdits mots de passe présentent une cohérence prédéterminée, délivrer ladite fonction d'authentification (1); et

(C) ladite seconde unité comprend également (a) des moyens de substitution (76, 77; 55, 56) pour, sur la base de la valeur actuelle de ladite seconde variable (Ta, Na), engendrer une valeur substituée (Tc1;Nc1),

**caractérisé en ce que**

- lesdits moyens de transmission (10, 12) sont configurés de telle manière qu'ils transmettent ledit premier mot de passe avec n digits de poids le plus faible [LSB(T);LSB(N)] de ladite première variable (T, N) de ladite première unité à ladite seconde unité;
- dans ladite valeur substituée (Tc1;Nc1), n digits de poids le plus faible [LSB(Ta);LSB(Na)] sont remplacés par lesdits n digits de poids le plus faible [LSB(T);LSB(N)] de ladite première variable (T,N), ladite seconde variable comprenant ainsi un premier groupe de digits de poids le plus faible et un second groupe de m digits de poids le plus fort [HSB(T);HSB(N)];
- ladite seconde unité comprend également:

b) des troisième moyens de calcul (79,81 à 84;57,58,60,61) pour
c) retenir comme seconde variable (Tc;Nc) pour le calcul dudit second mot de passe (Aa) ladite variable substituée, si celle-ci et la valeur actuelle (Ta;Na) de ladite seconde variable correspondent à au moins une première condition prédéterminée,
d) au cas où ladite première condition n'est pas satisfaite, ajuster dans ladite variable substituée par une unité (81,83;61) ledit second groupe de digits de poids le plus fort [HSB(T);HSB(N)], cet ajustement étant fonction d'une seconde condition prédéterminée et conduisant à la production d'une variable substituée et ajustée (Tc1,Tc2,Tc3;Nc1) et
e) retenir comme seconde variable (Tc, Nc) pour le calcul dudit second mot de passe (Aa) ladite variable substituée et ajustée.

2. Système suivant la revendication 1, **caractérisé en ce que**
lesdits premiers moyens générateurs (25 à 32 ; 24,24') sont agencés pour engendrer des première et troisième variables;
lesdits seconds moyens générateurs (70 à 75 ; 18,54) sont agencés pour engendrer des secondes et quatrième variables;
et **en ce que**
lesdites troisième et quatrième variables subissent des opérations de calcul analogues à celles appliquées respectivement auxdites première et seconde variables.

3. Système suivant la revendication 2, **caractérisé en ce que** lesdites première et seconde unités (2,3) comprennent respectivement des premiers et seconds moyens de combinaison (31,33a) pour combiner respectivement lesdites première et troisième variables (T,N) et lesdites seconde et quatrième variables (Ta,Na) à l'aide d'une fonction mathématique prédéterminée avant qu'elles soient soumises au chiffrement par lesdits premier et second algorithmes de chiffrement respectifs (36, 36a).

**4.** Système suivant la revendication 3, **caractérisé en ce que** ladite fonction mathématique consiste en une concaténation respectivement desdites première et troisième variables (T,N) et desdites seconde et quatrième variables (Ta,Na).

**5.** Système suivant l'une quelconque des revendications 1 à 4, **caractérisé en ce que** lesdits premiers et seconds moyens générateurs prévus dans lesdites première et seconde unités (2,3) sont agencées respectivement pour engendrer l'une desdits variables en fonction du nombre de demandes d'authentification (N, Na) faites par ladite première unité.

**6.** Système suivant l'une quelconque des revendications 1 à 4, **caractérisé en ce que** lesdits premiers et seconds moyens générateurs prévus dans lesdites première et seconde unités (2,3) sont agencées respectivement pour engendrer l'une desdites variables en fonction du temps (T,Ta).

**7.** Système suivant l'une quelconque des revendications 1 à 6, **caractérisé en ce que** lesdits troisièmes moyens de calcul comprennent en outre

a) des moyens (57) qui, pour mettre en oeuvre ladite première condition, sont agencés pour déterminer si ladite variable substituée (Na) est supérieure ou égale à ladite valeur actuelle (na) de la variable respective engendrée dans ladite seconde unité (3); et

b) des moyens (60,61) qui pour la mise en oeuvre de ladite seconde condition, incrémentent d'une unité ledit second groupe de m digits de poids le plus fort [HSB(N)], si ladite variable substituée (Na) est strictement inférieure à ladite valeur actuelle (Na) pour engendrer ainsi une valeur substituée et incrémentée (Nc1) et pour retenir ladite valeur substituée et incrémentée (Nc1) pour le chiffrement par ledit second algorithme de chiffrement (36a).

**8.** Système suivant l'une quelconque des revendications 1 à 6, **caractérisé en ce que** lesdits troisièmes moyens de calcul comprennent en outre

des moyens (79) mettant en oeuvre ladite première condition agencés pour

a) calculer une première différence entre ladite valeur actuelle (Ta) et ladite valeur substituée (Tc1);

déterminer si ladite première différence se situe dans une plage (Tv) dont l'étendue est au plus égale au nombre d'unités ayant le poids le plus fort $p_n$ dans ledit premier groupe de n digits, tel que représenté par le digit ayant le poids le plus faible $p_{n+1}$ dans ledit groupe de m digits de poids le plus fort [HSB(T)],

b) retenir comme variable à chiffrer (Tc) dans ladite seconde unité (3), ladite variable substituée (Tc1), si ladite différence se trouve dans ladite plage, et

des moyens (82,84) mettant en oeuvre ladite second condition agencés pour

a) ajuster (81) d'une unité dans un premier sens ledit poids le plus faible $p_{n+1}$, si ladite différence se situe à l'extérieur de ladite plage (Tv) pour engendrer une première variable substituée et ajustée (Tc2),

b) calculer une seconde différence entre ladite valeur actuelle (Ta) et ladite première variable substituée et ajustée (Tc2),

c) déterminer si ladite seconde différence se situe dans ladite plage (Tv),

d) retenir comme variable à chiffrer (Tc) dans ladite seconde unité (3) ladite première variable substituée et ajustée (Tc2), si ladite seconde différence se situe dans ladite plage,

e) ajuster d'une unité (82) dans un second sens opposé au premier sens ledit digit de poids le plus faible $p_{n+1}$ si ladite seconde différence se situe en dehors de ladite plage (Tv) pour engendrer une seconde variable substituée et ajustée (Tc3), et

f) retenir comme variable à chiffrer dans ladite seconde unité ladite seconde variable substituée et ajustée.

**9.** Système suivant l'une quelconque des revendications 1 à 6, **caractérisé en ce que** lesdits troisièmes moyens de calcul comprennent également

des moyens pour définir une plage de valeurs dont l'étendue est au plus égale au nombre d'unités ayant le poids le plus fort $P_n^-$ dans ledit premier groupe de n digits tel que représenté par le digit ayant le poids le plus faible $P_{n+1}$ dans ledit groupe de m digits de poids le plus fort [HSB(T)];

des moyens pour engendrer des première et seconde valeurs de vérification respectivement égales à la somme algébrique de ladite valeur actuelle et la valeur limite inférieure de ladite plage et ladite valeur actuelle et la limite supérieure de ladite plage;

des moyens pour mettre en oeuvre ladite première condition agencés pour

a) déterminer si ladite variable substituée (Tc1) se situe entre lesdites première et seconde valeurs de vérification;

b) retenir comme variable à chiffrer (Tc) dans ladite seconde unité (3), ladite variable substituée (Tc1), si elle se trouve entre lesdites valeurs de vérification;

des moyens mettant en oeuvre ladite second condition agencés pour

a) ajuster d'une unité dans un premier sens ledit poids le plus faible $P_{n+1}$, si ladite valeur substituée se situe à l'extérieur desdites valeurs de vérification pour engendrer une première variable substituée et ajustée (Tc2),

b) déterminer si ladite première variable substituée et ajustée (Tc2) se situe entre lesdites valeurs de vérification,

c) retenir comme variable à chiffrer (Tc) dans ladite seconde unité (3) ladite première variable substituée et ajustée (Tc2), si elle se situe entre lesdites valeurs de vérification,

d) ajuster d'une unité dans un second sens opposé au premier sens ledit digit de poids le plus faible $p_{n+1}$ si ladite première variable substituée et ajustée (Tc2) se situe en dehors desdites valeurs de vérification pour engendrer une seconde variable substituée et ajustée (Tc3), et

e) retenir comme variable à chiffrer (tc)dans ladite seconde unité ladite seconde variable substituée et ajustée (Tc3).

**10.** Système suivant l'une quelconque des revendications 1 à 9, **caractérisé en ce que** lesdits troisièmes moyens de calcul comprennent également

des moyens pour soustraire l'une desdites variables (Nc) subissant dans ladite seconde unité (3) le chiffrement par ledit second algorithme de ladite variable substituée (Nc) ou, le cas échéant, de ladite variable substituée et ajustée (Nc1) pour engendrer une valeur de différence (D), et

lesdits seconds moyens de calcul comprennent également

des moyens (59) pour calculer itérativement ledit second mot de passe (Aa) en fonction de ladite valeur de différence (D).

**11.** Système suivant l'une quelconque des revendication 6 à 10, **caractérisé en ce que** lesdits premiers et seconds moyens générateurs comprennent également:

une horloge de base (28;70) destinée à fournir un signal d'horloge de base composé des impulsions successives d'une fréquence prédéterminée,

des moyens de comptage (27,73) destinés à compter ces impulsions,

des moyens de suppression de digits (29;74) destinés à éliminer un nombre prédéterminé de digits de poids le plus faible du contenu desdits moyens de comptage pour engendrer respectivement dans ladite première unité une première valeur temporelle intermédiaire et dans ladite seconde unité une seconde valeur temporelle intermédiaire, lesdits variables fonction du temps étant engendrées en tant que fonctions respectives desdites valeurs temporelles intermédiaires.

**12.** Système suivant la revendication 11, **caractérisé en ce que** lesdits premiers et seconds moyens générateurs comprennent en outre des moyens d'ajustement (30) pour ajuster ledit nombre prédéterminé de digits de poids le plus faible à ôter du contenu desdits moyens de comptage (27,73).

**13.** Système suivant l'une quelconque des revendications 11 et 12, **caractérisé en ce que** lesdits premiers et seconds moyens générateurs comprennent également

des moyens (32,74) pour ajouter un nombre prédéterminés de digits auxdites valeurs temporelles intermédiaires de leur côté de poids le plus fort.

**14.** Système suivant l'une quelconque des revendications 8 et 9, **caractérisé en ce que** ladite seconde unité comprend en outre

des moyens de mémoire (18) destinés à mémoriser la date d'initialisation de chacune desdites premières unités (2),

des moyens (90) pour, au moment où une demande d'authentication est formulée à l'aide d'une première unité (2), comparer l'intervalle de temps qui s'est écoulé depuis la date correspondant à cette première unité (2) et mémorisée dans lesdits moyens de mémoire (18), à au moins un intervalle de temps prédéterminé, et

des moyens pour augmenter ladite plage (Tv), lorsque ledit intervalle de temps écoulé dépasse ledit intervalle de temps prédéterminé.

15. Système suivant l'une quelconque des revendications 1 à 11, **caractérisé en ce que** lesdits troisièmes moyens de calcul comprennent en outre

des moyens pour, après achèvement d'une demande d'authentification à l'aide d'une desdits premières unités, faire la somme algébrique de la valeur actuelle de l'une des variables (Ta) engendrées dans ladite seconde unité et ladite variable substituée (Tc1) ou, le cas échéant, ladite variable substituée et ajustée (Tc2;Tc3) de façon à engendrer une valeur de dérive (TOFFSET),

des moyens (18) pour mémoriser ladite valeur de dérive (TOFFSET) en tant que valeur actuelle de dérive, lesdits seconds moyens de calcul étant agencés de telle façon que pendant au moins une demande d'authentification consécutive formulée avec ladite même première unité (2), ils calculent ladite variable substituée (Tc1) ou, le cas échéant, ladite variable substituée et ajustée (Tc2, Tc3), en fonction de ladite valeur actuelle de dérive.

16. Système suivant la revendication 15, **caractérisé en ce que** lesdits troisièmes moyens de calcul sont agencés pour adapter lesdites première et seconde conditions en fonction de ladite valeur actuelle de dérive (TOFFSET).

17. Système suivant la revendication 6, **caractérisé en ce que** lesdits premiers et seconds moyens générateurs comprennent également

une horloge de base (28,70) destinée à fournir un signal d'horloge de base composé d'impulsions successives d'une fréquence prédéterminée,

des moyens de comptage (27,73) destinés à compter ces impulsions, lesdites première et seconde variables temporelles (T,Ta) étant engendrées respectivement en fonction du contenu desdits moyens de comptage,

des moyens de mémorisation (18) agencés pour mémoriser, pour chacune desdites unités, une valeur de compensation (TOFFSET NOUVEAU) pour compenser le contenu desdits moyens de comptage de ladite seconde unité vis-à-vis de la dérive desdits horloges de base desdites premières et seconde unités (2,3) respectivement, et

lesdits troisièmes moyens de calcul comprennent également des moyens (115,116,117) pour engendrer ladite valeur de compensation (TOFFSET NOUVEAU) en fonction de la valeur de dérive temporelle desdites horloges.

18. Système suivant la revendication 17, **caractérisé en ce que** lesdits troisièmes moyens de calcul comprennent également:

des premiers moyens (18,70,113) de détermination pour déterminer l'intervalle de temps $\Delta T$ s'écoulant entre une demande d'authentification actuelle formulée par ladite première unité et une demande d'authentification suivante formulée par celle-ci,

des seconds moyens (118) de détermination pour déterminer la différence entre la valeur de dérive temporelle calculée après achèvement de la demande actuelle d'authentification et la valeur temporelle de dérive calculée après achèvement de la demande suivante d'authentification ,

des moyens (120,121) pour refuser la demande suivante d'authentification si la différence entre les valeurs temporelles de dérive dépasse une valeur prédéterminée par comparaison audit intervalle de temps $\Delta T$ déterminé par lesdits premiers moyens de détermination.

19. Système suivant l'une quelconque des revendications précédentes, **caractérisé en ce que** lesdits premiers et seconds moyens de calcul (130 à 135) sont agencés pour calculer lesdites clés de chiffrement utilisées respectivement dans lesdites première et seconde unités (2,3) comme clés de chiffrement dynamiques (Kn,Kna) variant en fonction respectivement de variables correspondantes (N,Na) dans lesdites première et seconde unités.

20. Système suivant l'une quelconque des revendications précédentes, **caractérisé en ce que** ladite première unité (2) se présente sous la forme d'un dispositif portable électronique.

**Patentansprüche**

1. Authentifizierungssystem für Personen und/oder Nachrichten, welches mindestens eine erste für einen Benutzer personalisierte Einheit (2) und mindestens eine zweite Überprüfungseinheit (3) aufweist, welches in der Lage ist, eine Authentifizierungsfunktion (1) zur Authentifizierung der besagten Person und/oder der besagten Nachrichten zu liefern, bei dem:

(A) die besagte erste Einheit folgendes aufweist:

erste Erzeugungsmittel ( 25 bis 32; 24, 24') zur Erzeugung mindestens einer ersten Variablen (T,N);
erste Berechnungsmittel (33), welche dazu bestimmt sind, mit Hilfe mindestens eines ersten, einen Verschlüsselungsschlüssel (Kn) benutzenden, zur Verschlüsselung mindestens der ersten Variablen (T, N) bestimmten Verschlüsselungsalgorithmus (35) ein erstes Passwort zu erzeugen (A, Ac);
Übertragungsmittel (10, 12) zur Übertragung des besagten ersten Passwortes A, Ac) zur besagten zweiten Einheit (3);

(B) die besagte zweite Einheit folgendes aufweist:

zweite Erzeugungsmittel (70 bis 75; 18, 54) um, als Antwort auf von einer spezifizierten Einheit unter den besagten ersten Einheiten (2) gemachten Authentifizierungsanfrage mindestens eine zweite, der besagten ersten Einheit zugeordnete Variable (Ta, Na) zu erzeugen;
zweite Berechnungsmittel (33a) zur Erzeugung eines zweiten Passwortes (Aa) mit Hilfe mindestens eines zweiten, einen Verschlüsselungsschlüssel (Kna) benutzenden, zur Verschlüsselung mindestens der zweiten Variablen (Ta, Na) bestimmten Verschlüsselungsalgorithmus, wobei die ersten und zweiten Variablen gemeinsam, aber unabhängig voneinander in besagten ersten und zweiten Einheiten (2, 3) bestimmt werden;
Mittel (85) zum Vergleichen der besagten ersten und zweiten Passwörter (Ac, Aa);
Mittel, die die besagte Authentifizierungsfunktion (1) ausliefern, wenn eine vorbestimmte Kohärenz besteht zwischen den beiden Passwörtern; und

(C) die besagte zweite Einheit weist ebenfalls (a) Substitutionsmittel (76, 77; 55, 56) auf, um auf der Basis des aktuellen Wertes der besagten zweiten Variablen (Ta, Na) einen Substitutionswert (Tc1, Nc1) zu erzeugen,

**dadurch gekennzeichnet, daß**

- die besagten Übertragungsmittel (10, 12) so konfiguriert sind, daß sie das besagte erste Passwort mit n Bits mit dem schwächsten Gewicht [LSB(T); LSB(N)] der besagten ersten Variablen (T,N) von der besagten ersten Einheit zur besagten zweiten Einheit übertragen;
- im besagten substituierten Wert (Tc1; Nc1) n Bits mit dem schwächsten Gewicht [LSB(Ta); LSB(Na)] ersetzt werden durch die besagten n Bits mit dem schwächsten Gewicht [LSB(T); LSB(N)] der besagten ersten Variablen (T, N), wobei die besagte zweite Variable so eine erste Gruppe von Bits mit dem schwächsten Gewicht und eine zweite Gruppe von m Bit mit dem stärksten Gewicht aufweist [HSB(T); HSB(N)];
- die besagte zweite Einheit ebenfalls aufweist:

b) dritte Berechnungsmittel (79, 81 bis 84 ; 57, 58, 60, 61) um
c) als zweite Variable (Tc, Nc) für die Berechnung des besagten zweiten Passwortes (Aa) die besagte substituierte Variable zu behalten, wenn diese und der aktuelle Wert (Ta; Na) der besagten zweiten Variablen mindestens einer ersten vorbestimmten Bedingung entsprechen,
- d) für den Fall daß die besagte erste Bedingung nicht zufriedenstellend ist, in der ersten besagten substituierten Variablen durch eine Einheit (81, 83 ; 61) die besagte zweite Gruppe von Bits mit dem stärksten Gewicht [HSB(T); HSB(N)] justieren, wobei diese Justierung von einer zweiten vorbestimmten Bedingung abhängt und zur Erzeugung einer substituierten und justierten Variablen (Tc1 Tc2, Tc3; Nc1) führt und
- e) als zweite Variable (Tc, Nc) für die Berechnung des besagten zweiten Passwortes (Aa) die besagte substituierte und justierte Variable behalten.

2. System nach Anspruch 1, **dadurch gekennzeichnet, daß**
die besagten ersten Erzeugungsmittel (25 bis 32; 24, 24') zum Erzeugen der ersten und dritten Variablen angeordnet sind;
die besagten zweiten Erzeugungsmittel (70 bis 75; 18, 54) zum Erzeugen der zweiten und vierten Variablen angeordnet sind; und daß
die besagten dritten und vierten Variablen Berechnungsoperationen unterzogen werden, die denen analog sind, die auf die ersten und zweiten Variablen angewendet werden.

3. System nach Anspruch 2, **dadurch gekennzeichnet, daß** die besagten ersten und zweiten Einheiten (2, 3) jeweils erste und zweite Kombinationsmittel (31, 33a) aufweisen, um jeweils die ersten und dritten Variablen (T, N) und die besagten zweiten und vierten Variablen (Ta, Na) mit Hilfe einer vorbestimmten mathematischen Funktion zu kombinieren, bevor sie der Verschlüsselung durch die besagten jeweiligen ersten und zweiten Verschlüsselungsalgorithmen (36, 36a) unterzogen werden.

4. System nach Anspruch 3, **dadurch gekennzeichnet, daß** die besagte mathematische Funktion aus einer Verkettung jeweils der besagten ersten und dritten Variablen (T, N) und der besagten zweiten und vierten Variablen (Ta, Na) besteht.

5. System nach irgendeinem der Ansprüche 1 bis 4, **dadurch gekennzeichnet, daß** die in den besagten ersten und zweiten Einheiten (2, 3) vorgesehenen besagten ersten und zweiten Erzeugungsmittel jeweils so angeordnet sind, um eine der besagten Variablen in Abhängigkeit von der Anzahl der von der ersten Einheit gemachten Authentifizierungsanfragen (N, Na) zu erzeugen.

6. System nach irgendeinem der Ansprüche 1 bis 4, **dadurch gekennzeichnet, daß** die in den besagten ersten und zweiten Einheiten (2, 3) vorgesehenen besagten ersten und zweiten Erzeugungsmittel jeweils so angeordnet sind, um eine der besagten Variablen in Abhängigkeit von der Zeit (T, Ta) zu erzeugen.

7. System nach irgendeinem der Ansprüche 1 bis 6, **dadurch gekennzeichnet, daß** die besagten dritten Berechnungsmittel ausserdem folgendes aufweisen:

a) Mittel (57), die zur Ausführung der besagten ersten Bedingung angeordnet sind, um zu bestimmen, ob die besagte erste substituierte Variable (Na) grösser oder gleich dem besagten aktuellen Wert (na) der jeweiligen, in der besagten zweiten Einheit (3) erzeugten Variable ist; und
b) Mittel (60, 61) die zur Ausführung der besagten zweiten Bedingung die besagte zweite Gruppe von m Bits mit dem stärksten Gewicht [HSB(N)] um eine Einheit inkrementieren, wenn die besagte substituierte Variable (Na) strikt unter dem besagten aktuellen Wert (Na) liegt, um so einen substituierten und inkrementierten Wert (Nc1) zu erzeugen und den besagten substituierten und inkrementierten Wert (Nc1) für die Verschlüsselung durch den besagten zweiten Verschlüsselungsalgorithmus (36a) zu behalten.

8. System nach irgendeinem der Ansprüche 1 bis 6, **dadurch gekennzeichnet, daß** die besagten dritten Berechnungsmittel außerdem
Mittel (79) zur Ausführung der ersten Bedingung aufweisen, um:

a) eine erste Differenz zwischen dem besagten aktuellen Wert (Ta) und dem besagten substituierten Wert (Tc1) zu berechnen;
zu bestimmen, ob die besagte erste Differenz innerhalb eines Bereiches (Tv) liegt, dessen Erstreckung höchstens gleich ist der Anzahl von Einheiten, die das höchste Gewicht $p_n$ in der besagten ersten Gruppe von n Bits haben, so wie es von dem Bit dargestellt ist, welches das niedrigste Gewicht $p_{n+1}$ in der besagten Gruppe von m Bits mit dem höchsten Gewicht [HSB(T)] hat,
b) als in der besagten zweiten Einheit (3) zu verschlüsselnde Variable (Tc) die besagte substituierte Variable (Tc1) zu behalten, wenn sich die besagte Differenz innerhalb des besagten Bereichs befindet, und

Mittel (82, 84), welche die besagte zweite Bedingung ausführen, und so angeordnet sind,

a) das besagte schwächste Gewicht $p_{n+1}$ um eine Einheit in einer ersten Richtung zu justieren (81), wenn die besagte Differenz sich außerhalb des besagten Bereichs (Tv) befindet, um eine erste substituierte und justierte Variable (Tc2) zu erzeugen,
b) eine zweite Differenz zwischen dem besagten aktuellen Wert (Ta) und der besagten ersten substituierten und justierten Variablen (Tc2) zu berechnen,
c) zu bestimmen, ob die besagte zweite Differenz sich innerhalb des besagten Bereichs (Tv) befindet,
d) als in der besagten zweiten Einheit (3) zu verschlüsselnde Variable (Tc) die besagte erste substituierte und justierte Variable (Tc2) zu behalten, wenn sich die besagte zweite Differenz innerhalb des besagten Bereichs befindet,
e) das besagte schwächste Gewicht $p_{n+1}$ um eine Einheit in einer zweiten der ersten Richtung entgegengesetzten Richtung zu justieren (82), wenn die besagte Differenz sich außerhalb des besagten Bereichs (Tv) befindet, um eine zweite substituierte und justierte Variable (Tc3) zu erzeugen,
f) als in der besagten zweiten Einheit zu verschlüsselnde Variable die besagte zweite substituierte und justierte Variable zu behalten.

**9.** System nach irgendeinem der Ansprüche 1 bis 6, **dadurch gekennzeichnet, daß** die besagten dritten Berechnungsmittel ebenfalls Mittel aufweisen zur Definition eines Bereichs, dessen Erstreckung höchstens gleich der Anzahl von Einheiten ist, die das höchste Gewicht $p_n$ in der besagten Gruppe von n Bits haben, so wie es dargestellt ist von dem Bit, welches das niedrigste Gewicht $p_{n+1}$ in der besagten Gruppe von m Bits mit dem höchsten Gewicht aufweist [HSB(T)];

Mittel zur Erzeugung erster und zweiter Überprüfungswerte, welche jeweils der algebraischen Summe des besagten aktuellen Wertes und des unteren Grenzwertes des besagten Bereichs und dem besagten aktuellen Wert und der oberen Grenze des besagten Bereichs sind;

Mittel zur Ausführung der besagten ersten Bedingung , welche so angeordnet sind, um

> a) zu bestimmen, ob sich die besagte erste substituierte Variable (Ts1) zwischen den besagten ersten und zweiten Überprüfungswerten befindet;
> b) als in der besagten zweiten Einheit (3) zu verschlüsselnde Variable (Tc) die besagte substituierte Variable (Tc1) zu behalten, wenn sie sich innerhalb der besagten Überprüfungswerte befindet;

Mittel zur Ausführung der besagten zweiten Bedingung, welche so angeordnet sind, um

> a) das besagte schwächste Gewicht $p_{n+1}$ um eine Einheit in einer ersten Richtung zu justieren, wenn der besagte substituierte Wert sich außerhalb der besagten Überprüfungswerte befindet, um eine erste substituierte und justierte Variable (Tc2) zu erzeugen,
> b) zu bestimmen, ob die besagte zweite substituierte und justierte Variable (Tc2) sich zwischen den besagten Überprüfungswerten befindet
> c) als in der besagten zweiten Einheit (3) zu verschlüsselnde Variable (Tc) die besagte erste substituierte und justierte Variable (Tc2) zu behalten, wenn sie sich zwischen den besagten Überprüfungswerten befindet,
> d) das besagte schwächste Gewicht $p_{n+1}$ um eine Einheit in einer zweiten der ersten Richtung entgegengesetzten Richtung zu justieren, wenn die besagte erste substituierte und justierte Variable (Tc2) sich außerhalb der besagten Überprüfungswerte befindet, um eine zweite substituierte und justierte Variable (Tc3) zu erzeugen, und
> e) als in der zweiten Einheit zu verschlüsselnde Variable (tc) die besagte zweite substituierte und justierte Variable (Tc3) zu behalten.

**10.** System nach irgendeinem der Ansprüche 1 bis 9, **dadurch gekennzeichnet, daß** die besagten dritten Berechnungsmittel ebenfalls

Mittel aufweisen, um eine der besagten Variablen (Nc), die in der besagten zweiten Einheit (3) der Verschlüsselung durch den besagten zweiten Algorithmus unterzogen werden, von der besagten substituierten Variablen (Nc) oder eventuell der besagten substituierten und ajustierten Variablen (Nc1) abzuziehen, um eine Differenz (D) zu erzeugen , und

die besagten zweiten Berechnungsmittel ebenfalls Mittel (59) aufweisen, um iterativ das besagte zweite Passwort (Aa) in Abhängigkeit von dem besagten Differenzwert (D) zu berechnen.

**11.** System nach irgendeinem der Ansprüche 6 bis 10, **dadurch gekennzeichnet, daß** die besagten ersten und zweiten Erzeugungsmittel ebenfalls folgendes aufweisen:

> einen Basistaktgeber (28, 70), welcher dazu dient, ein aus aufeinanderfolgenden Impulsen einer vorbestimmten Frequenz bestehendes Basistaktsignal zur Verfügung zu stellen,
> Zählmittel (27, 73) welche dazu bestimmt sind, diese Impulse zu zählen, Bit-Unterdrückungsmittel (29, 74) welche dazu bestimmt sind, eine vorbestimmte Anzahl von Bits mit dem schwächsten Gewicht des Inhalts der besagten Zählmittel zu eliminieren, um jeweils in der besagten ersten Einheit einen ersten intermediären Zeitwert und in der besagten zweiten Einheit einen zweiten intermediären Zeitwert zu erzeugen, wobei die besagten variablen Zeifunktionen als jeweilige Funktionen der besagten intermediären Zeitwerte erzeugt werden.

**12.** System nach Anspruch 11, **dadurch gekennzeichnet, daß** die besagten ersten und zweiten Erzeugungsmittel außerdem Justiermittel (30) zur Justierung der besagten vorbestimmten Anzahl von Bits mit dem schwächsten Gewicht, welche aus dem Inhalt der besagten Zählmittel (27, 73) zu entfernen sind, aufweisen.

**13.** System nach irgendeinem der Ansprüche 11 und 12, **dadurch gekennzeichnet, daß** die besagten ersten und zweiten Erzeugungsmittel ausserdem Mittel (32, 74) zum Hinzufügen einer vorbestimmten Anzahl von Bits zu den besagten intermediären Zeitwerten auf ihrer stärksten Gewichtsseite aufweisen.

**14.** System nach irgendeinem der Ansprüche 8 und 9, **dadurch gekennzeichnet, daß** die besagte zweite Einheit außerdem folgendes aufweist:

Speichermittel (18), welche dazu bestimmt sind, das Initialisierungsdatum jeder der besagten ersten Einheiten (2) zu speichern,

Mittel (90), um zu dem Augenblick, an dem eine Authentifizierungsanfrage mit Hilfe einer ersten Einheit (2) formuliert worden ist, das Zeitintervall zu vergleichen, das seit dem Datum verstrichen ist, welches dieser ersten Einheit (2) entspricht und in den besagten Speichermitteln (18) gespeichert ist zu mindestens einem vorbestimmten Zeitintervall, und

Mittel, um den besagten Bereich (Tv) zu erhöhen, wenn das besagte verstrichene Zeitintervall das besagte vorbestimmte Zeitintervall überschreitet.

**15.** System nach irgendeinem der Ansprüche 1 bis 11, **dadurch gekennzeichnet, daß** die besagten dritten Berechnungsmittel außerdem folgendes aufweisen:

Mittel zum Bilden, nach der Erledigung einer Authentifizierungsanfrage mit Hilfe einer der besagten ersten Einheiten, der algebraischen Summe aus dem aktuellen Wert einer der in der besagten zweiten Einheit erzeugten Variablen (Ta) und der besagten substituierten Variablen (Tc1) oder eventuell der besagten substituierten und justierten Variablen (Tc2; Tc3) , um einen Driftwert (TOFFSET) zu erzeugen,

Mittel (18) zum Speichern des besagten Driftwertes (TOFFSET) als aktuellen Driftwert, wobei die besagten zweiten Berechnungsmittel so angeordnet sind, daß während mindestens einer mit der besagten selben ersten Einheit (2) formulierten nachfolgender Authentifizierungsanfrage sie die besagte substituierte Variable (Tc1) oder eventuell die besagte substituierte und justierte Variable (Tc2, Tc3) in Abhängigkeit von dem besagten aktuellen Driftwert berechnen.

**16.** System nach Anspruch 15, **dadurch gekennzeichnet, daß** die besagten dritten Berechnungsmittel so angeordnet sind, um die besagten ersten und zweiten Bedingungen in Abhängigkeit von dem besagten aktuellen Driftwert anzupassen.

**17.** System nach Anspruch 6 , **dadurch gekennzeichnet, daß** die besagten ersten und zweiten Erzeugungsmittel ebenfalls folgendes aufweisen:

einen Basistaktgeber (28, 70), welcher dazu dient, ein aus aufeinanderfolgenden Impulsen einer vorbestimmten Frequenz bestehendes Basistaktsignal zur Verfügung zu stellen,

Zählmittel (27, 73) welche dazu bestimmt sind, diese Impulse zu zählen, wobei die besagten ersten und zweiten Zeitvariablen (T, Ta) jeweils in Abhängigkeit vom Inhalt der besagten Zählmittel erzeugt werden,

Speichermittel (18), welche so angeordnet sind, um für jede der besagten Einheiten einen Kompensierungswert (TOFFSET NOUVEAU) zu speichern, um den Inhalt der besagten Zählmittel der besagten zweiten Einheit gegenüber der Drift der besagten Basistaktgeber jeweils der besagten ersten und zweiten Einheiten (2, 3) zu kompensieren, und

die besagten dritten Berechnungsmittel ebenfalls Mittel (115, 116, 117) aufweisen, um den besagten Kompensationswert (TOFFSET NOUVEAU) in Abhängigkeit vom Zeitdriftwert der besagten Taktgeber zu erzeugen.

**18.** System nach Anspruch 17, **dadurch gekennzeichnet, daß** die besagten dritten Berechnungsmittel ebenfalls folgendes aufweisen:

erste Bestimmungsmittel (18, 70, 113), um das Zeitintervall $\Delta t$ zu bestimmen, welches zwischen einer aktuellen, von der ersten Einheit formulierten Authentifizierungsanfrage und einer folgenden von der Einheit formulierten Authentifizierungsanfrage verstreicht,

zweite Bestimmungsmittel (118), um die Differenz zwischen dem nach Erledigung der aktuellen Authentifizierungsanfrage berechneten Zeitdriftwert und dem nach Erledigung der folgenden Authentifizierunganfrage berechneten Zeitdriftwert zu bestimmen,

Mittel zum Zurückweisen (120, 121) der folgenden Authentifizierungsanfrage, wenn der Unterschied zwischen den Zeitdriftwerten einen vorbestimmten Wert überschreitet, und zwar durch Vergleich mit dem durch die besagten ersten Bestimmungsmittel bestimmten Zeitintervall $\Delta T$.

**19.** System nach irgendeinem der vorangehenden Ansprüche, **dadurch gekennzeichnet, daß** die besagten ersten und zweiten Berechnungsmittel (130 bis 135) so angeordnet sind, um die besagten Verschlüsselungsschlüssel zu verschlüsseln, welche jeweils in den besagten ersten und zweiten Einheiten (2, 3) als dynamische Verschlüsselungsschlüssel (Kn, Kna) benutzt werden, welche jeweils in Abhängigkeit von den entsprechenden Variablen (N, Na) in den besagten ersten und zweiten Einheiten variieren.

20. System nach irgendeinem der vorangehenden Ansprüche, **dadurch gekennzeichnet, daß** die besagte erste Einheit (2) sich in Form einer portablen elektronischen Vorrichtung präsentiert.

**Claims**

1. A system for authentication of individuals and/or messages, including at least one first unit (2) personalized for an individual and at least one second verification unit (3) capable of delivering an authentication function authenticating said individual and/or said messages, **characterized in that**:

    (A) said first unit comprises:

    first generating means (25 to 32 ; 24, 24') for generating at least a first variable (T, N) ;
    first calculating means (33) for producing a first password (A, Ac) with the aid of at least a first encryption algorithm (35) using an encryption key (Kn) for encrypting at least said first variable (T, N);
    transmission means (10, 12) for transmitting said first password (A, Ac) to said second unit (3);

    (B) said second unit comprises :

    second generating means (70 to 75 ; 18, 54) for, in response to an authentication request made by way of a specified one of said first units (2), generating at least a second variable (Ta, Na) assigned to this first unit;
    second calculating means (33a) for producing a second password (Aa) with the aid of at least one second encryption algorithm using an encryption key (Kna) for encrypting at least said second variable (Ta, Na), said first and second variables being produced in concert, but independently in said first and second units (2,3) ;
    means (85) for comparing said first and second passwords (Ac, Aa);
    delivering means for, in the event of a predetermined consistency of said passwords, delivering said authentication function (1);

    (C) said second unit further comprises a) substituting means (76, 77 ; 55, 56) for, based on the current value of said second variable (Ta, Na), generating a substituted value (Tc1 ; Nc1),

    **characterized in that**
    said transmission means (10, 12) being configured so as to transmit said first password with n digits having the least significant weight [LSB(T) ; LSB(N)] of said first variable (T, N) from said first unit to said second unit;
    in said substituted value (Tc1; Nc1n), n digits having the least significant weight [LSB(Ta); LSB(Na)] are replaced by said n digits having the least significant weight [LSB(T) ; LSB(N)] of said first variable (T, N), said second variable thereby comprising a first group of least significant digits and a second group of m highest significant digits [HSB(T); HSB(N)];
    said second unit also comprises:

    b) third calculating means (79, 81 to 84 ; 57, 58, 60, 61) for
    c) retaining as second variable (Tc ; Nc) for the calculation of said second password (Aa) said substituted variable, if said substituted variable and said current value (Ta ; Na) of said second variable are consistent with at least a first predetermined condition,
    d) if said first predetermined condition is not satisfied, adjusting in said substituted value by one unit (81, 83 ; 61) said second group of highest significant digits [HSB(T) ; HSB(N)], said adjusting being dependent from a second predetermined condition, said adjusting generating a substituted and adjusted variable (Tc1, Tc2, Tc3; Nc1), and
    e) retaining as second variable (Tc, Nc) for the calculation of said second password (Aa) said substituted and adjusted variable.

2. System according to claim 1, **characterized in that**

   - said first and second generating means (25 to 32 ; 24, 24') are configured so as to generate first and third variables ;
   - said second generating means (70 to 75 ; 18, 54) are configured so as to generate second and fourth variables ; and **in that**
   - said third and fourth variables are submitted to calculating operations similar to those applied respectively to said first and second variables.

3. System according to claim 2, **characterized in that** said first and second units (2, 3) comprise respectively first and second combination means (31, 33a), for combining respectively said first and third variables (T, N) and said second and fourth variables (Ta, Na), using a predetermined mathematical function, before encryption by said respective first and second encryption algorithms (36, 36a).

4. System according to claim 3, **characterized in that** said mathematical function is a concatenation of said first and third variables (T, N) and of said second and fourth variables (Ta, Na) respectively.

5. System according to any of claims 1 to 4, **characterized in that** said first and second generating means provided in said first and second units (2, 3) are configured respectively so as to generate one of said variables as a function of the number of authentication requests (N, Na) made by said first unit.

6. System according to any of claims 1 to 4, **characterized in that** said first and second generating means provided in said first and second units (2, 3) are configured respectively so as to generate one of said variables as a function of time (T, Ta).

7. The system as claimed in any of claims 1 to 6, **characterized in that** said third calculating means further comprises:

   a) means (57) which, for implementing said first condition, is so configured as to determine if said substituted variable (Na) is higher than or equal to said current value (na) of the respective variable generated in said second unit (3) ; and
   b) means (60, 61) which, for implementing said second condition, is so configured as to increment by one unit said second group of m highest significant digits [HSB(N)], if said substituted variable (Na) is strictly lower than said current value (Na), thereby generating a substituted and incremented value (Nc1), and for retaining said substituted and incremented value (Nc1) for the encryption with said second encryption algorithm (36a).

8. The system as claimed in any of claims 1 to 6, **characterized in that** said third calculation means further comprises:

   - means (79) for implementing said first condition configured so as to:

     a) calculate a first difference between said current value (Ta) and said substituted value (Tc1) ;
        determine if said first difference is within a range (Tv) the extent of which is at the most equal to the number of units having the highest weight $p_n$ in said first group of n digits, as represented by the digit having the lowest weight $P_{n+1}$ in said group of m highest significant digits [HSB(T)],
     b) retaining as variable (Tc) to be encrypted in said second unit (3) said substituted variable (Tc1) if said difference is within said range, and

   - means (82, 84) for implementing said second condition configured so as to:

     a) adjust (81) by one unit in a first direction said lowest weight $P_{n+1}$, if said difference is outside said range (Tv) thereby generating a first substituted and adjusted value (Tc2),
     b) calculate a second difference between said current value (Ta) and said first substituted and adjusted variable (Tc2),
     c) determine if said second difference is within said range (Tv),
     d) retain as a variable (Tc) to be encrypted in said second unit (3) said first substituted and adjusted variable (Tc2), if said second difference is within said range,
     e) adjust by one unit (82) in a second direction opposed to said first direction said lowest digit $p_{n+1}$ if said second difference is outside said range (Tv), thereby generating a second substituted and adjusted variable (Tc3), and

f) retaining as a variable to be encrypted in said second unit said second substituted and adjusted variable.

9. The system as claimed in any of claims 1 to 6, **characterized in that** said third calculating means further comprises:

- means for defining a range of values the extent of which is at the most equal to a number of units having the highest weight $p_n$ in said first group of n digits, as represented by the digit having the lowest weight $P_{n+1}$ in said group of m highest significant digits [HSB(T)] ;
- means for generating first and second checking values, said checking values being respectively equal to the algebraic sum of said current value and the lowest limit value of said range and said current value and the highest limit of said range;
- means for implementing said first predetermined condition configured so as to:

  a) determine if said substituted variable (Ts1) is between said first and second checking values;
  b) retain as a variable (Tc) to be encrypted in said second unit (3) said substituted variable (Tc1), if said substituted variable is between said checking values;

- means for implementing said second condition configured so as to:

  a) adjust by one unit in a first direction said lowest weight $p_{n+1}$, if said substituted value is outside said first and second checking values thereby generating a first substituted and adjusted variable (Tc2),
  b) determine if said second substituted and adjusted variable (Tc2) is between said checking values;
  c) retain as a variable (Tc) to be encrypted in said second unit (3) said first substituted and adjusted variable (Tc2) if said first substituted and adjusted variable is between said checking values;
  d) adjust by one unit in a second direction opposed to said first direction said lowest digit $P_{n+1}$ if said first substituted and adjusted variable (Tc2) is outside said checking values thereby generating a second substituted and adjusted variable (Tc3), and
  e) retain as a variable (Tc) to be encrypted in said second unit said second substituted and adjusted variable (Tc3).

10. The system as claimed in any of claims 1 to 9, **characterized in that** said third calculating means further comprises means for subtracting one of said values (Nc) subjected to encryption by said algorithm in said second unit (3) from said substituted variable (Nc) or, as the case may be, from said substituted and adjusted variable (Nc1), thereby generating a difference value (D), and
said second calculating means further comprising means (59) for iteratively calculating said second password (Aa) as a function of said difference value (D).

11. The system as claimed in any of claims 6 to 10, **characterized in that** said first and second generating means further comprises:

a base clock (28; 70) for supplying a basic clock signal composed of successive pulses having a predetermined frequency,
counter means (27,73) for counting said pulses,
digit canceling means (29 ; 74) for canceling a predetermined number of the least significant digits from the contents of said counting means, thereby generating respectively in said first unit a first intermediate time value and in said second unit a second intermediate time value, whereby said first and second time dependent variables are generated respectively as functions of said first and second intermediate time values.

12. The system as claimed in claim 11, **characterized in that** said first and second generating means further comprise adjusting means (30) for regulating said predetermined number of least significant digits to be canceled from the contents of said counting means (27, 73).

13. The system as claimed in any of claims 11 and 12, **characterized in that** said first and second generating means further comprise:

means (32, 74) for adding a predetermined number of digits to said intermediate time values at the side of the highest weight thereof.

14. The system as claimed in any of claims 8 and 9, **characterized in that** said second unit further comprises:

storing means (18) for storing the date of initialization of each of said first units (2),

means (90) for, at the time an authentication request is formulated with a first unit (2), comparing the time period elapsed between the date relevant for said first unit (2) and stored in said storing means (18) and at least a predetermined time interval, and

means for increasing said range (Tv) when said elapsed time interval exceeds said predetermined time interval.

15. The system as claimed in any of claims 1 to 11, **characterized in that** said third calculating means further comprises:

- means for, upon completion of an authentication request formulated with one of said first units, algebraically summing said current value of one of said variables (Ta) generated in said second unit and said substituted variable (Tc1) or, as the case may be, said substituted and adjusted variable (Tc2 ; Tc3) so as to generate an offset value (TOFFSET),
- means (18) for storing said offset value (TOFFSET) as a current offset value, said second calculating means being so arranged as to, during at least a subsequent authentication request formulated with said same first unit (2) calculate said substituted variable (Tc1), or, as the case may be, said substituted and adjusted value (Tc2, Tc3), as a function of said current offset value.

16. The system as claimed in claim 15, **characterized in that** said third calculating means are so arranged as to adapt said first and second conditions as a function of said current offset value (TOFFSET).

17. The system as claimed in claim 6, **characterized in that** said first and second generating means further comprise:

- a base clock (28, 70) for supplying a basic clock signal composed of successive pulses having a predetermined frequency,
- counter means (27, 73) for counting said pulses, said first and second time dependent variables (T, Ta) being generated respectively as functions of the contents of said counter means,
- storing means (18) so arranged as to store, for each of said units, a compensating value (TOFFSET NOUVEAU) for compensating the contents of said counter means of said second unit against drift of the base clocks of said first and second units (2, 3), respectively, and
- said third calculating means further comprising means (115, 116, 117) for generating said compensating value (TOFFSET NOUVEAU) as a function of said time offset value of said clocks.

18. The system as claimed in claim 17, **characterized in that** said third calculating means further comprises:

first determining means (18, 70, 113) for determining the time interval $\Delta T$ between a current authentication request formulated by said first unit and a subsequent authentication request formulated by said unit,

second determining means (118) for determining the difference between the time offset value calculated upon completion of said current authentication request and the time offset value calculated upon completion of said subsequent authentication request,

means (120, 121) for refusing said subsequent authentication request when said difference between said time offset values exceeds a predetermined level as compared with said time interval $\Delta T$ as determined by said first determining means.

19. The system as claimed in any of the preceding claims, **characterized in that** said first and second calculating means (130 to 135) are so arranged as to calculate said encryption keys used respectively in said at least one first unit and said second unit (2, 3) as dynamic encryption keys (Kn, Kna) varying as a function of corresponding variables (N, Na) respectively in said first and second units.

20. The system as claimed in any of the preceding claims, **characterized in that** said first unit (2) is a portable electronics device.

## FIG.: 1

## FIG.: 8

FIG.:2

DE LA CARTE

**3**

**18**

| BANQUE DE DONNÉES | | |
|---|---|---|
| N°. | Kna | Na |
| CARTE 1 | Kna (1) | Na (1) |
| CARTE 2 | Kna (2) | Na (2) |
| CARTE X | Kna (X) | Na (X) |

**50**

N° D'IDENT. PUBL. + MOT DE PASSE

**12**

INTERFACE

N° D'IDENT. PUBL.

**51**

Ac

**52**

LSB (N)

**53**

LSB (T)

**54**

| HSB (N) | LSB (Na) | → Na |

**55**

SUBSTITUTION

**56**

| HSB(N) | LSB(N) | → Nc |

**57**

Nc = OU > Na ?

NON

**60**

AUGMENTER HSB(N) DE 1

**15**

OUI

**61**

| HSB(N) +1 | LSB(N) | → Nc1 |

**64**

ACCES REFUSÉ

**58** $D = Nc - Na$

**63** D > Dx ?

OUI

NON

**59** ITERATIONS

**62** Nc

**80** Tc ← Tc

**1** FONCTION

**87** $Na = Nc + 1$

**88** DÉRIVATION CLÉ Kna

**33a** CALCUL MOT DE PASSE

**36a** Aa

**85** Aa = Ac ?

OUI

NON

**86** ACCES REFUSÉ

**61A**

FIG.: 3A

HORLOGE SYSTEME — 70

Δ _ REF _ TIME — 71

— 72

HORL.SERV. — 73

15

EXTRACTION ET COMPLÉMENT — 74

Ta

| HSB(T) | LSB(Ta) | — 75

LSB(T)

SUBSTITUTION — 76

DEFINITION PLAGE TV $-5 \leqslant Ts \leqslant +4$ — 78

Tc1

| HSB (T) | LSB(T) | — 77

79
Tc1 COMPATIBLE AVEC TV ?
OUI
NON

Tc2 — 81
| HSB(T) _ 1 | LSB(T) |

82
Tc2 COMPATIBLE AVEC TV ?
OUI — Tc
NON

Tc3 — 83
| HSB(T)+1 | LSB(T) |

84
Tc3 COMPATIBLE AVEC TV ?
OUI
NON — ERREUR

FIG.:3B

FIG.:3

| FIG.:3A | FIG.:3B |

FIG.: 4

FIG.: 5

FIG.: 6

EP 0 891 610 B1

| N° | T OFFSET (n_1) | HORL. SERV. (n_1) |
|---|---|---|
| CARTE 1 | | |
| CARTE 2 | | |
| CARTE X | | |

N° D'IDENT. PUBL.

18

HORL. SYST. — 70

Δ REF. TIME — 71

— 72

HORL. SERV. — 73

+ — 111

AJUSTEMENT HORL. SERV. — 112

Tc — 115

— 116

TOFFSET NOUVEAU — 117

113 — 118

ΔT — 114

Δ OFFSET — 119

TV NOUVEAU — 124

T OFFSET NOUVEAU (n_1) — 123

HORL. SERV. (n_1) — 122

Δ OFFSET ET ΔT CONCORDENT ? — 120

OUI    NON

DÉTECTION ANOMALIE — 121

FIG.: 7

29